(19)

**Europäisches Patentamt**
**European Patent Office**
**Office européen des brevets**

(11) **EP 4 661 442 A1**

(12) **EUROPEAN PATENT APPLICATION**
published in accordance with Art. 153(4) EPC

(43) Date of publication:
**10.12.2025 Bulletin 2025/50**

(21) Application number: **24749968.4**

(22) Date of filing: **18.01.2024**

(51) International Patent Classification (IPC):
**H04W 4/38** (2018.01)　　　**H04W 72/50** (2023.01)
**H04W 72/121** (2023.01)

(52) Cooperative Patent Classification (CPC):
**H04W 4/38; H04W 72/121; H04W 72/50**

(86) International application number:
**PCT/JP2024/001198**

(87) International publication number:
**WO 2024/162014 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.01.2023　JP 2023012325**

(71) Applicant: **Sony Semiconductor Solutions
Corporation
Atsugi-shi, Kanagawa 243-0014 (JP)**

(72) Inventors:
• **MITSUI, Yoshifumi
　Atsugi-shi, Kanagawa 243-0014 (JP)**
• **OGAWA, Yoshimi
　Atsugi-shi, Kanagawa 243-0014 (JP)**

• **SUGAWARA, Takayuki
　Atsugi-shi, Kanagawa 243-0014 (JP)**
• **MIYOSHI, Hironori
　Atsugi-shi, Kanagawa 243-0014 (JP)**
• **ANDO, Hideki
　Atsugi-shi, Kanagawa 243-0014 (JP)**
• **ISHIKAWA, Hirotaka
　Atsugi-shi, Kanagawa 243-0014 (JP)**
• **BURNS, James
　Basingstoke, Hampshire RG224SB (GB)**
• **CHEN, Jian-Rong
　Basingstoke, Hampshire RG224SB (GB)**

(74) Representative: **MFG Patentanwälte
Meyer-Wildhagen Meggle-Freund
Gerhard PartG mbB
Amalienstraße 62
80799 München (DE)**

(54) **INFORMATION PROCESSING DEVICE, INFORMATION PROCESSING METHOD, AND PROGRAM**

(57)　The present disclosure relates to an information processing device and an information processing method that enable processing to be performed simply, and a program.

In a device including an air conditioner and a temperature sensor that measures a temperature of a surrounding environment, and a server, a temperature measured by the temperature sensor is set as a condition for the device to perform transmission to the server, and for example, a temperature higher than an environmental temperature is set, so that the temperature of the surrounding environment does not rise to such a degree, and thus the frequency of communication to the server is reduced. The present invention can be applied to a control system of an air conditioner using a device including a sensor.

*FIG. 2*

EP 4 661 442 A1

**Description**

TECHNICAL FIELD

The present disclosure relates to an information processing device, an information processing method, and a program, and more particularly relates to an information processing device, an information processing method, and a program capable of appropriately controlling a communication frequency with a server in a control system using an IoT device.

BACKGROUND ART

Control systems using Internet of Things (IoT) devices have been widely and generally spread.
For example, in a case of a control system that controls set temperatures of a plurality of air conditioners installed in a wide space such as an office, IoT devices including temperature sensors installed at various positions in a room transmit sensed temperature information to a server. The server supplies the acquired temperature information to the air conditioner, and controls the set temperature on the basis of the indoor temperature information that is sensing data acquired by the air conditioner.
At this time, as the communication frequency between the IoT devices and the server is higher, the set temperature can be controlled with higher accuracy, but the power consumption in the IoT device increases.
For example, in a case where the IoT device is driven by a battery, the higher the communication frequency, the faster the consumption of the battery, the shorter the time that can be driven by the battery, and for example, it is necessary to increase the frequency of maintenance such as battery replacement.
Therefore, a technique of controlling the overall processing balance by switching the processing load of the device on the basis of information of the remaining battery amount or temperature of the device has been proposed (see Patent Document 1).

CITATION LIST

PATENT DOCUMENT

Patent Document 1: WO 2022/004412 A1

SUMMARY OF THE INVENTION

PROBLEMS TO BE SOLVED BY THE INVENTION

However, in the technique of Patent document 1, although the processing balance of the entire system can be controlled, if the communication frequency is simply reduced, the communication frequency is reduced, and there is a possibility that the control cannot be appropriately performed even if an abnormal temperature change occurs.
The present disclosure has been made in view of such a situation, and enables, in particular, appropriate control of a communication frequency with a server in a control system using an IoT device.

SOLUTIONS TO PROBLEMS

An information processing device and a program according to a first aspect of the present disclosure are an information processing device and a program including a sensor that measures a sensor value, a transmission unit that transmits information of the sensor value measured by the sensor to a server device as sensor value information, and a transmission condition information acquisition unit that acquires, from the server device, transmission condition information that is a condition of the sensor value when the transmission unit transmits the sensor value information to the server device, in which when the sensor value satisfies the condition on the basis of the transmission condition information, the transmission unit transmits the sensor value information to the server device.
An information processing method according to a first aspect of the present disclosure is an information processing method including the steps of transmitting information of a sensor value measured by a sensor that measures the sensor value to a server device as sensor value information, and acquiring, from the server device, transmission condition information that is a condition of the sensor value when the sensor value information is transmitted to the server device, in which when the sensor value satisfies the condition on the basis of the transmission condition information, the sensor value information is transmitted to the server device.
In the first aspect of the present disclosure, a sensor value is measured, information of the measured sensor value is transmitted to a server device as sensor value information, transmission condition information that is a condition of the sensor value when the sensor value information is transmitted to the server device is acquired from the server device, and when the sensor value satisfies the condition on the basis of the transmission condition information, the sensor value information is transmitted to the server device.

An information processing device and a program according to a second aspect of the present disclosure are an information processing device and a program including a sensor value information acquisition unit that acquires information of a sensor value measured and transmitted by a sensor of another information processing device as sensor value information, and a transmission condition information supply unit that sets a condition of the sensor value when the another information processing device transmits the sensor value information to the information processing device, and supplies the information of the condition of the sensor value to the another information processing device as transmission condition information.

An information processing method according to a second aspect of the present disclosure is an information processing method including the steps of acquiring information of a sensor value measured and transmitted by a sensor of another information processing device as sensor value information, setting a condition of the sensor value when the another information processing device transmits the sensor value information to the information processing device, and supplying the information of the condition of the sensor value to the another information processing device as transmission condition information.

In the second aspect of the present disclosure, information of a sensor value measured and transmitted by a sensor of another information processing device is acquired as sensor value information, a condition of the sensor value when the another information processing device transmits the sensor value information to the information processing device is set, and the information of the condition of the sensor value is supplied to the another information processing device as transmission condition information.

BRIEF DESCRIPTION OF DRAWINGS

Fig. 1 is a diagram illustrating a configuration example of a first embodiment of an air conditioner control system of the present disclosure.
Fig. 2 is a sequence diagram illustrating an outline of an operation in Fig. 1.
Fig. 3 is a hardware block diagram illustrating a configuration example of a device in Fig. 1.
Fig. 4 is a hardware block diagram illustrating a configuration example of a server in Fig. 1.
Fig. 5 is a hardware block diagram illustrating a configuration example of an air conditioner in Fig. 1.
Fig. 6 is a hardware block diagram illustrating a configuration example of a temperature setting panel in Fig. 1.
Fig. 7 is a diagram illustrating a description of SceneMode.
Fig. 8 is a flowchart illustrating first task processing in Fig. 1.
Fig. 9 is a flowchart illustrating second task processing in Fig. 1.
Fig. 10 is a flowchart illustrating third task processing in Fig. 1.
Fig. 11 is a flowchart illustrating fourth task processing in Fig. 1.
Fig. 12 is a sequence diagram in a case where SceneMode is generated by SetSceneMode.
Fig. 13 is a diagram illustrating a configuration example of a second embodiment of an air conditioner control system of the present disclosure.
Fig. 14 is a sequence diagram illustrating an outline of an operation in Fig. 13.
Fig. 15 is a sequence diagram illustrating an outline of the operation in Fig. 13.
Fig. 16 is a hardware block diagram illustrating a configuration example of a device in Fig. 13.
Fig. 17 is a flowchart illustrating 13th task processing in Fig. 15.
Fig. 18 is a flowchart illustrating 14th task processing in Fig. 15.
Fig. 19 is a flowchart illustrating 15th task processing in Fig. 15.
Fig. 20 illustrates a configuration example of a general-purpose computer.

MODE FOR CARRYING OUT THE INVENTION

Hereinafter, preferred embodiments of the present disclosure will be described in detail with reference to the accompanying drawings. Note that, in the present specification and drawings, components having substantially the same functional configuration are denoted by the same reference signs, and redundant description is omitted.
Hereinafter, modes for carrying out the present technology will be described. The description will be given in the following order.

1. First Embodiment
2. Modifications
3. Second Embodiment
4. Example of Execution by Software

<<1. First Embodiment>>

<Configuration Example of Air Conditioner Control System>

In particular, the present disclosure enables a control system using an Internet of Things (IoT) device to appropriately control a communication frequency with a server.

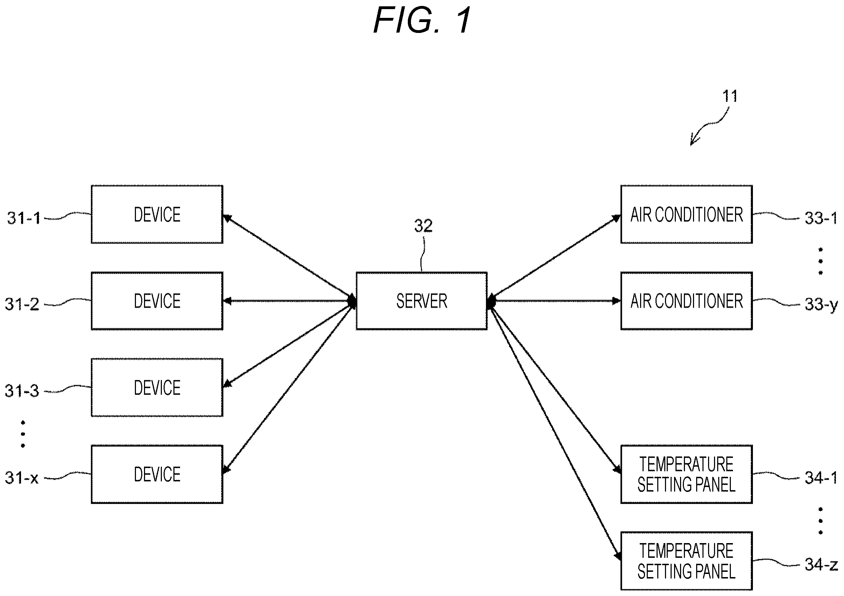

A configuration example of an air conditioner (air conditioning) control system according to an embodiment of the present disclosure will be described with reference to Fig. 1.

Fig. 1 is a diagram illustrating a configuration example of an air conditioner control system 11 according to an embodiment of the present disclosure. The air conditioner control system 11 in Fig. 1 appropriately controls set temperatures of a plurality of air conditioners installed in a relatively wide space such as an office according to temperature states at various positions in the space.

More specifically, as illustrated in Fig. 1, an air conditioner control system 11 according to the present embodiment includes devices 31-1 to 31-x, a server 32, air conditioners 33-1 to 33-y, and temperature setting panels 34-1 to 34-z.

Note that, hereinafter, in a case where it is not necessary to individually distinguish the devices 31-1 to 31-x, the air conditioners 33-1 to 33-y, and the temperature setting panels 34-1 to 34-z, they are simply referred to as a device 31, an air conditioner 33, and a temperature setting panel 34.

Each of these devices functions as the air conditioner control system 11, for example, by being connected to a network (not illustrated) via a base station or the like (for example, a base station of a mobile phone, an access point of a wireless local area network (LAN), and the like) not illustrated.

Note that, as a communication method used in the network described above, any method can be applied regardless of wired or wireless (for example, a fifth generation communication system, WiFi (registered trademark), Bluetooth (registered trademark), and the like), but a communication method capable of stably transmitting a large volume of data at a high speed can be used.

Furthermore, the air conditioner control system 11 according to the present embodiment can receive sensing data from a plurality of devices 31 and control a set temperature of the air conditioner 33 based on the received sensing data. Hereinafter, an outline of each device included in the air conditioner control system 11 according to the present embodiment will be described.

<Device>

The device 31 acquires sensing data (for example, temperature, image, sound, and the like) of the installed surrounding environment, and transmits distribution data (predetermined data) acquired from the acquired sensing data to the server 32.

For example, the device 31 is provided at various positions in a space such as an office where the temperature is controlled by the air conditioner 33, senses information necessary for controlling the set temperature of the air conditioner 33 among information of the surrounding environment, and transmits sensing data serving as a sensing result to the server 32.

That is, in this example, since the set temperature of the air conditioner 33 is controlled, the device 31 includes a temperature sensor that measures the temperature of the surrounding environment and an infrared camera that functions as thermography, and transmits information of the temperature acquired by the temperature sensor and sensing data including the infrared image captured by the infrared camera to the server 32.

Note that, in the embodiment of the present disclosure, the device 31 does not necessarily function as an infrared camera as long as the device functions at least as a temperature measurement device.

The device 31 acquires information for controlling the communication frequency supplied from the server 32, and communicates the sensing data to the server 32 on the basis of the acquired information for controlling the communication frequency. Note that the control of the communication frequency will be described later in detail.

Furthermore, the device 31 is not limited to the above-described device. For example, the device 31 can be an imaging device (camera) mounted on a mobile object such as an automobile, an imaging device mounted on a smartphone carried by a user, or an imaging device such as a monitoring camera installed in a home, a store, or the like, and in this case, the sensing data is an image.

In this case, these imaging devices can acquire an image by condensing light from a peripheral subject placed, forming a light image on an imaging surface, and converting the light image formed on the imaging surface into an electrical image signal.

Note that the internal configuration of the device 31 is not basically limited as long as device has an interface (data transfer format, data transfer method, and the like) common to the air conditioner control system 11. Therefore, the air conditioner control system 11 according to the present embodiment can take in various devices 31 having different specifications. Note that a detailed configuration of the device 31 will be described later.

<Server>

The server 32 acquires temperature information as sensing data from the device 31 and supplies the temperature information to the air conditioner 33. Furthermore, upon acquiring setting information from the temperature setting panel 34, the server 32 supplies the acquired information of the set temperature to the air conditioner 33.

Furthermore, the server 32 generates information for controlling the communication frequency of the device 31 on the basis of the setting information from the temperature setting panel 34, and transmits the information to the device 31.

Moreover, the server 32 can be implemented by hardware such as a central processing unit (CPU), a read only memory (ROM), and a random access memory (RAM). Note that a detailed configuration of the server 32 will be described later.

<Air Conditioner>

The air conditioner 33 is an air conditioning facility installed in a plurality of places in a relatively wide space for controlling temperature, such as an office, and controls its own operation temperature on the basis of the temperature information that is sensing data from the device 31 and is supplied from the server 32 and the information of the set temperature supplied from the server 32 when the temperature setting panel 34 is operated.

<Temperature Setting Panel>

The temperature setting panel 34 is an operation panel that is operated by a user and is installed in a plurality of places in a relatively wide space for controlling temperature such as an office, and transmits information of the set temperature corresponding to an operation content to the server 32.

<Outline of Operation of Air Conditioner Control System in Fig. 1>

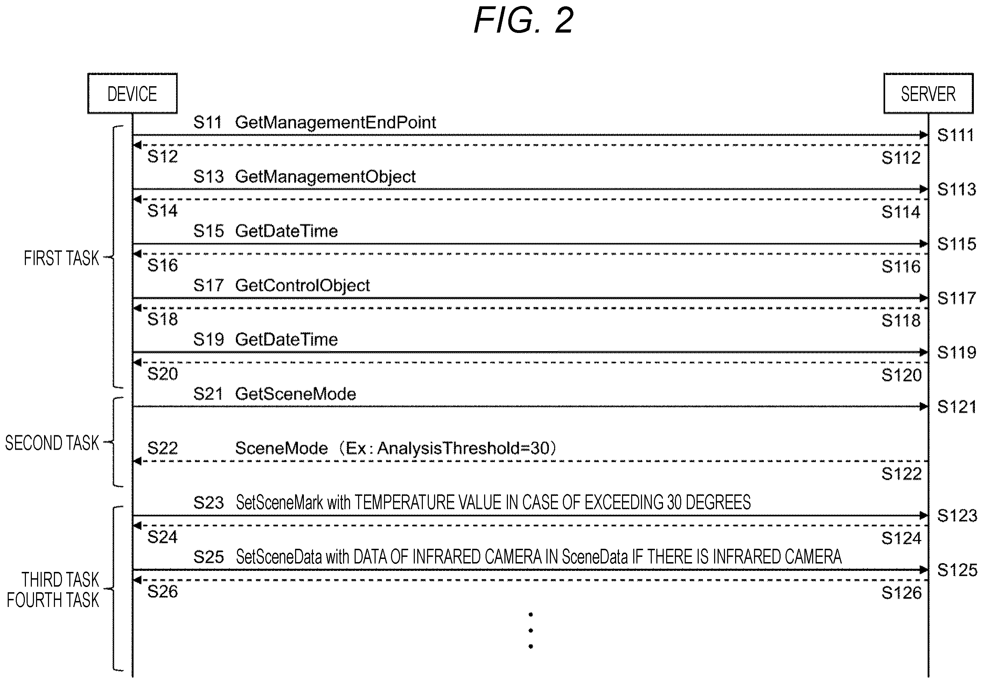

Next, an outline of an operation of the air conditioner control system 11 in Fig. 1 will be described with reference to a flowchart in Fig. 2.

Note that, in the sequence diagram of Fig. 2, operations of the device 31 and the server 32 will be described, but operations including the air conditioner 33 and the temperature setting panel 34 will be described later in detail.

Furthermore, in Fig. 2, processing will be described according to an example in a case where a command including an application programming interface (API) used when a specification defined by the Network of Intelligent Camera Ecosystem (NICE) Alliance is applied is used, but there is no description indicating that the application range of the present technology is limited only to the NICE standard. That is, the present technology can be applied to the NICE standard, and can also be applied to standards other than the NICE standard.

As illustrated in the left part of Fig. 2, the operation of the air conditioner control system 11 in Fig. 1 is performed in the order of a first task, a second task, a third task, and a fourth task from the top.

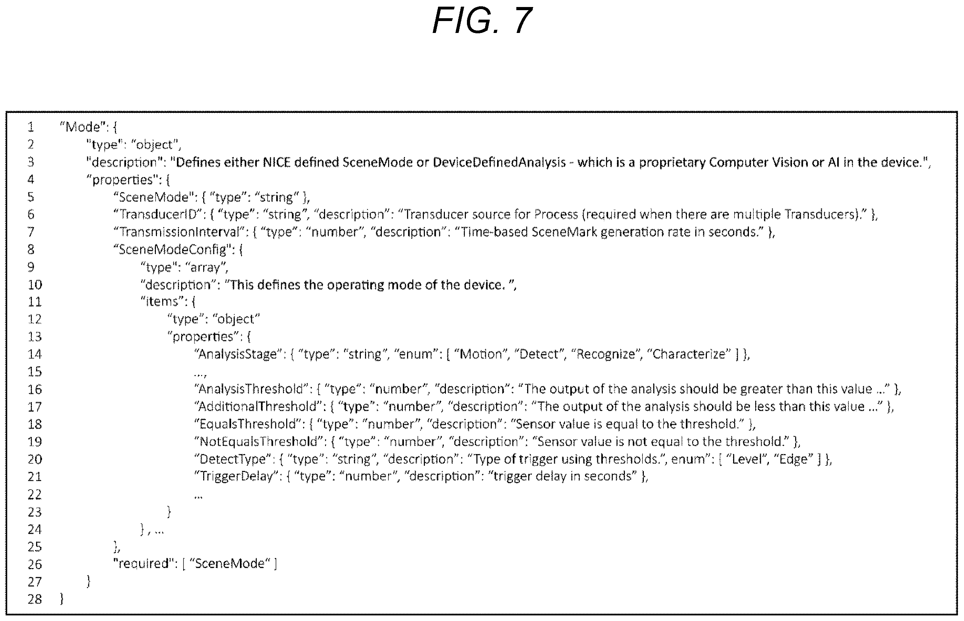

The first task is a processing task such as acquisition of destination information and time synchronization required for exchanging information defining an operation mode related to control of the communication frequency of the IoT device such as the device 31 called SceneMode with the server 32. The first task includes a processing task performed once at startup and a processing task performed periodically. Note that a specific example of SceneMode will be described with reference to Fig. 7.

The second task is a processing task in which the device 31 requests and acquires SceneMode including various setting conditions related to the control of the communication frequency from the server 32 on the basis of the destination information acquired in the processing of the first task.

The third task is a processing task in which the device 31 transmits the sensed temperature of the surrounding environment to the server 32 at a communication frequency based on SceneMode acquired in the second task.

The fourth task is a processing task of the server 32 and the temperature setting panel 34, which is not expressed in the sequence diagram of Fig. 2, and is a processing task of updating the setting conditions of SceneMode for controlling the communication frequency according to an operation content of the temperature setting panel 34.

That is, in step S11, the device 31 requests the server 32 for ManagementEndPoint, which is destination information of an API called GetManagementObject to be a process in step S13 described later, by using a command including an API called GetManagementEndPoint.

Strictly speaking, the ManagementEndPoint is a token for accessing a server of the NICE License Authority that distributes a Management Object, public key information of the other party for encryption, and the like, but here, description is omitted on the assumption that the server 32 functions as a server of the NICE License Authority.

In response to this process, in step S111, upon receiving GetManagementEndPoint, the server 32 transmits the corresponding ManagementEndPoint to the device 31 in step S112. In step S12, the device 31 acquires ManagementEndPoint.

In step S13, the device 31 requests the server 32 for a ManagementObject, which is destination information of an API called GetControlObject to be a process in step S17 described later, by using a command including an API called GetManagementObject on the basis of ManagementEndPoint.

Strictly speaking, the Management Object is a token for accessing the server of the NICE Account Service that delivers DeviceControl Object, public key information of the other party for encryption, and the like, but here, description is omitted assuming that the server 32 functions as a server of the NICE License Authority.

In step S113, upon receiving the GetManagementObject, the server 32 transmits the corresponding ManagementObject to the device 31 in step S114. In step S14, the device 31 acquires the Management Object.

In step S15, the device 31 requests time information from the server 32 using a command including an API called GetDateTime. In step S115, upon receiving GetDateTime, the server 32 transmits, in step S116, DateTime which is information of the current time to the device 31. In step S16, the device 31 acquires DateTime, which is information of the current time, and synchronizes the time with the server 32.

In step S17, the device 31 requests DeviceControl Object, which is destination information of a command including an API called GetSceneMode, which is a process in step S21 described later, by using a command including the API called GetControlObject. Upon receiving GetControlObject in step S117, the server 32 transmits the DeviceControl Object to the device 31 in step S118. In step S18, the device 31 acquires the DeviceControl Object.

In step S19, the device 31 requests time information from the server 32 using a command including an API called GetDateTime. In step S119, upon receiving GetDateTime, the server 32 transmits, in step S120, DateTime which is information of the current time to the device 31. In step S20, the device 31 acquires DateTime, which is information of the current time, and synchronizes the time with the server 32.

The processing up to this point is the processing of the first task. When the first processing is performed after the activation of the device 31, the processing of the first task is repeated at predetermined time intervals thereafter.

In step S21, the device 31 requests SceneMode, which is information for controlling the transmission frequency of the temperature information to be sensing data, using a command including the API called GetSceneMode on the basis of the DeviceControl Object.

In step S121, upon acquiring GetSceneMode, the server 32 performs device condition setting based on a determination condition for controlling a communication frequency including a set temperature set by operating the temperature setting panel 34 to be described later, generates SceneMode reflecting the device condition setting, and transmits the SceneMode to the device 31. In step S22, upon acquiring the SceneMode, the device 31 transmits, to the server 32, temperature information that is sensing data sensed at a communication frequency based on the device condition setting in SceneMode in subsequent processing.

The device condition setting for controlling the communication frequency is, for example, a transmission condition for the device 31 based on the temperature information that is sensing data. For example, in a case where a lower limit temperature of the temperature that is the sensing data is set to 30 degrees as the transmission condition, the transmission condition is considered to be satisfied when the temperature that is the sensing data exceeds 30 degrees that is the lower limit temperature.

In this case, as the lower limit temperature to be the device condition setting is set to a higher temperature that is far away from the current set temperature, the frequency at which the transmission condition is satisfied becomes lower, so that the communication frequency is reduced. Conversely, as the lower limit temperature is set to a temperature closer to the set temperature, the frequency at which the transmission condition is satisfied becomes higher, and thus the communication frequency is set higher.

For example, the server 32 may set the threshold temperature to a high temperature away from the set temperature for the device 31 having a small battery amount or the device 31 expected to have a low remaining battery amount or already have a high load due to a high battery temperature, thereby reducing the communication frequency and suppressing the power consumption and load related to communication.

In addition, since it is not necessary to consider the possibility of power loss for the device 31 to which the power supply is connected, the server 32 may increase the communication frequency.

Moreover, in a case where the communication with the device 31 is pay communication, the server 32 may set the lower limit temperature to a high temperature away from the set temperature to reduce the communication frequency and suppress the cost related to the communication.

In addition, since it is not necessary to consider the communication cost for the device 31 or the like connected by wire that can be used for free, the server 32 may set the communication frequency to be high.

Moreover, in a case where the communication load is a high load on the basis of the state of the communication load between the server 32 and the device 31, the server 32 may set the lower limit temperature to a high temperature away from the set temperature, and may set the communication frequency so as to reduce the communication frequency and reduce the communication load.

In addition, the server 32 may compare the processing load in the server 32 with the processing load in the device 31, and set the lower limit temperature so as to balance both the processing loads. That is, for example, in a case where the processing load of the device 31 is larger than the processing load of the server 32, the lower limit temperature is set to a high temperature away from the set temperature, and the communication frequency is set so as to reduce the communication load by reducing the communication frequency.

As the device condition setting, various conditions such as upper limit specification, range specification, out of range specification, specific value specification, and a value other than the specific value can be set in addition to the lower limit specification of the sensing data.

Note that GetSceneMode described above is an API defined in the NICE standard, but the device condition setting for determining the frequency of communication with the server 32 in the device 31 is not defined in the standard, and is assumed to be newly defined and used.

Furthermore, SceneMode generated by the server 32 on the basis of GetSceneMode from the device 31 and supplied to the device 31 is also a command including an API defined in the NICE standard, but device condition setting for controlling the communication frequency is not defined, and is assumed to be newly defined and used.

Note that the processing of steps S21, S121, S122, and S22 is the processing of the second task, but the processing of the second task is repeated at predetermined time intervals.

In step S23, the device 31 measures the temperature of the surrounding environment, and transmits information of the temperature that is the sensing data to the server 32 using a command including an API called SetSceneMark, for example, when the temperature exceeds a lower limit value temperature defined in SceneMode.

The API called SetSceneMark is a command including an API transmitted when a transmission condition is satisfied on the basis of the device condition setting of SceneMode acquired on the basis of GetSceneMode.

In step S123, the server 32 receives SetSceneMark, acquires temperature information that is sensing data of the device 31, and transmits information of reception confirmation of SetSceneMark in step S124. In step S24, the device 31 receives the information of reception confirmation of SetSceneMark. At this time, the server 32 supplies the temperature information that is the sensing data of the device 31 and is included in SetSceneMark, to the air conditioner 33. The air conditioner 33 controls its own operating temperature on the basis of the set temperature set by the temperature setting panel 34 and the temperature information that is the sensing data. That is, in a case where the temperature of the sensing data is higher than the set temperature, the air conditioner 33 sets the operation temperature so that the temperature decreases. Conversely, in a case where the temperature of the sensing data is lower than the set temperature, the air conditioner 33 sets the operation temperature so that the temperature becomes higher.

In step S25, the device 31 measures the temperature of the surrounding environment, and transmits information other than the information of the temperature that is the sensing data to the server 32 using a command including an API called SetSceneData when, for example, the lower limit temperature defined in SceneMode is exceeded. For example, in a case where there is an infrared image by an infrared camera as information related to temperature, the device 31 transmits infrared information by using a command including the API called SetSceneData.

In step S125, the server 32 receives SetSceneData and acquires an infrared image which is sensing data of the device 31, and in step S126, transmits information of reception confirmation of SetSceneData. In step S26, the device 31 receives the information of reception confirmation of SetSceneData. At this time, the server 32 supplies the information of the infrared image that is sensing data of the device 31 included in SetSceneData to the air conditioner 33. The air conditioner 33 controls its own operation temperature from the set temperature set by the temperature setting panel 34 and information of an infrared image which is sensing data.

Note that, although the processing of steps S23 to S26 and the processing of steps S123 to S126 described above are processing of the third task, when the device 31 repeats the temperature measurement of the surrounding environment and exceeds the lower limit temperature defined in SceneMode, the device transmits temperature information (information and an infrared image when there is an infrared camera) to the server 32 as sensing data.

Note that the fourth task will be described later in detail.

As described above, in the present disclosure, the server 32 sets a condition that defines the communication frequency on the basis of the information regarding the device 31 on the basis of GetSceneMode from the device 31, and transmits the condition to the device 31 as SceneMode. The device 31 acquires SceneMode supplied from the server 32, and transmits sensing data only when a transmission condition is satisfied on the basis of device condition setting that defines a communication frequency.

Thus, the frequency of communication from the device 31 to the server 32 is reduced, so that power consumption related to communication in the device 31 can be reduced.

Furthermore, at this time, by setting a temperature as a condition that defines the communication frequency, for example, by setting a temperature at which it is clearly considered that an abnormality has occurred, even if the communication frequency is set to be relatively low, the information of the temperature that is sensing data is reliably transmitted when the temperature reaches an abnormal level, so that the communication frequency can be appropriately controlled.

Moreover, the IoT device that can thus be used as the device 31 can be used even in a configuration including only a small battery as long as the same application program is installed.

Furthermore, it is possible to reduce the load of the communication line in both the device 31 and the server 32. Accordingly, the processing load itself of the server 32 can also be reduced.

Moreover, the communication cost between the device 31 and the server 32 can be reduced, and for example, the reinforcement cost of the server 32 can be reduced even if scale up is carried out.

<Configuration Example of Device>

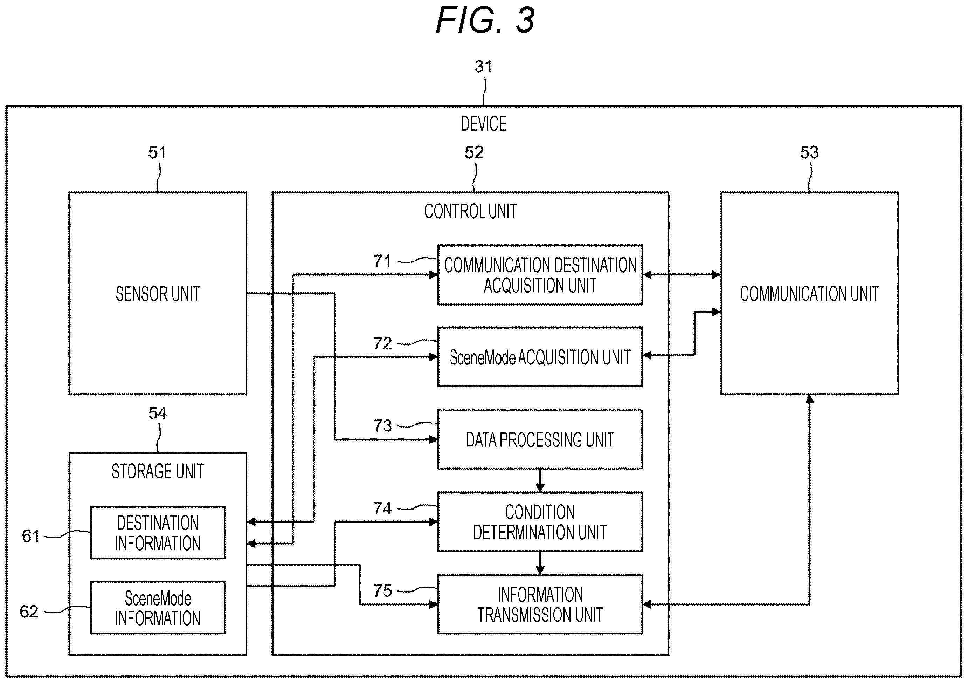

Next, a configuration example of the device 31 will be described with reference to Fig. 3. Fig. 3 is a block diagram illustrating a functional configuration example of the device 31 according to the present embodiment. Specifically, as illustrated in Fig. 3, the device 31 includes a sensor unit 51, a control unit 52, a communication unit 53, and a storage unit 54.

The sensor unit 51 acquires sensing data and outputs the acquired sensing data to the control unit 52 described later. Specifically, in a case where the device 31 has a function of measuring the temperature in the air conditioner control system 11, the sensor unit 51 functions as a temperature sensor and outputs the temperature of the surrounding environment to the control unit 52 as sensing data.

In addition, the sensor unit 51 may acquire other sensing data as long as the information is information regarding the surrounding environment that can be used to control the air conditioner 33, and for example, in a case where an infrared camera or the like is provided, it is possible to cause the sensor unit to function as thermography by capturing an image corresponding to a temperature as an infrared image, and thus, in this case, an infrared image may be acquired as sensing data and output to the control unit 52.

Note that the sensor unit 51 may be provided so as to be fixed in the device 31, or may be provided detachably on the device 31.

In addition, the sensor unit 51 may include a time of flight (TOF) sensor (not illustrated) as a depth sensor in addition to the temperature sensor and the infrared imaging device. The TOF sensor can acquire shape information (depth information/image) such as a distance and unevenness between the TOF sensor and the subject by directly or indirectly measuring a return time of reflected light from the subject. Moreover, the sensor unit 51 may include a sound collecting device (microphone), a humidity sensor, an atmospheric pressure sensor, a sunshine sensor, and the like, and is not particularly limited as long as it can acquire sensing data from the surrounding environment. Note that, in the present specification, an example of a case where a temperature and an infrared image are acquired as sensing data will be described.

The control unit 52 has a function of processing the sensing data acquired by the sensor unit 51, controlling the communication unit 53, and transmitting the sensing data to the server 32. The control unit 52 is implemented by, for example, a processing circuit such as a CPU, a ROM, a RAM, and the like. Specifically, as illustrated in Fig. 3, the control unit 52 includes a communication destination acquisition unit 71, a SceneMode acquisition unit 72, a data processing unit 73, a condition determination unit 74, and an information transmission unit 75.

The communication destination acquisition unit 71 mainly executes commands including APIs of GetManagementEndPoint, GetManagementObject, GetControlObject, and GetDateTime in the above-described first task processing. That is, the communication destination acquisition unit 71 controls the communication unit 53 to communicate with the server 32, acquires information related to the communication destination, and stores the acquired information as destination information 61 in the storage unit 54. In addition, the communication destination acquisition unit 71 may read and use the destination information 61 stored in the storage unit 54 as necessary.

The SceneMode acquisition unit 72 executes a command including the API called GetSceneMode mainly in the second task processing described above, acquires the destination information 61 from the storage unit 54, and transmits GetSceneMode to the server 32. Then, the SceneMode acquisition unit 72 acquires SceneMode supplied from the server 32 in response thereto, and stores the same in the storage unit 54 as SceneMode information 62.

The data processing unit 73 mainly executes the above-described third task processing, acquires the temperature and the infrared image, which are sensing data, from the sensor unit 51, processes the temperature and the infrared image into a predetermined format, and outputs the processed data to the condition determination unit 74.

The condition determination unit 74 mainly executes the above-described third task processing, reads the SceneMode information 62 in the storage unit 54, acquires the device condition setting on the basis of the description of SceneMode that is the SceneMode information 62, and determines whether or not the transmission condition of sensing data is satisfied on the basis of the sensing data from the data processing unit 73. Then, in a case where the sensing data satisfies the transmission condition, the condition determination unit 74 outputs a transmission instruction of the sensing data to the information transmission unit 75.

The information transmission unit 75 mainly executes the above-described third task processing, and when receiving a transmission instruction from the condition determination unit 74, the information transmission unit executes a command including an API such as SetSceneMark or SetSceneData, acquires the destination information 61 from the storage unit 54, and controls a communication unit 82 to send the sensing data supplied from the information transmission unit 75 to the server 32.

The communication unit 53 transmits and receives information to and from an external device such as the server 32. The communication unit 53 can be said to be a communication interface having a function of transmitting and receiving data. Note that the communication unit 53 is implemented by a communication device (not illustrated) such as a communication antenna, a transmission/reception circuit, and a port.

The storage unit 54 stores the destination information 61 and the SceneMode information 62, and stores programs, information, and the like for the control unit 52 to execute various types of processing, and information obtained by the processing. The storage unit 54 is implemented by, for example, a storage device such as a hard disk drive (HDD).

<Configuration Example of Server>

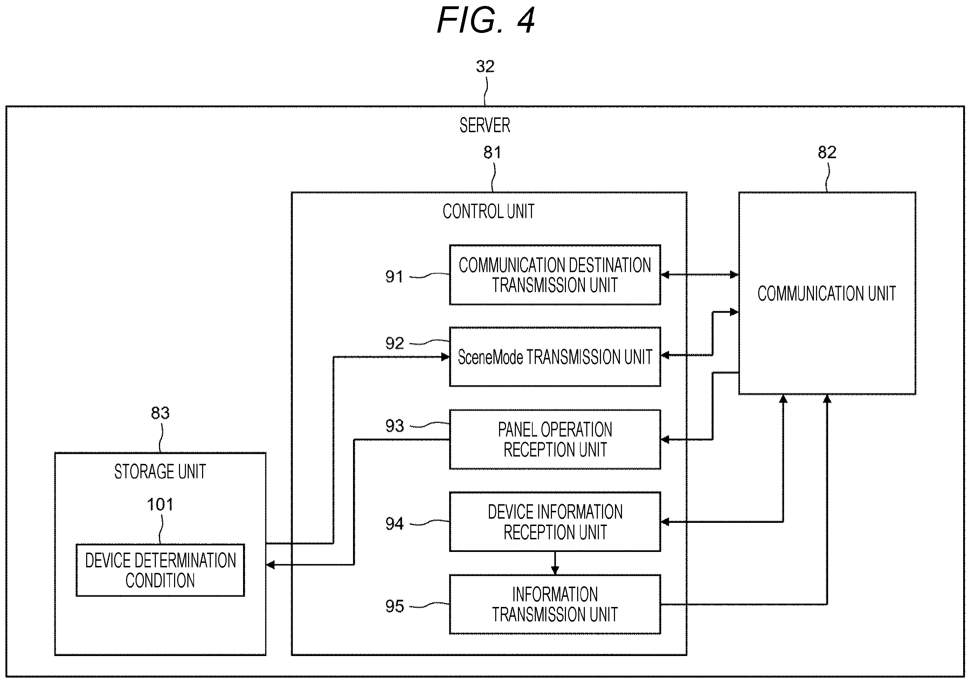

Next, a configuration example of the server 32 according to the present embodiment will be described with reference to Fig. 4. Fig. 4 is a block diagram illustrating a functional configuration example of the server 32 according to the present embodiment. Specifically, as illustrated in Fig. 4, the server 32 includes a control unit 81, a communication unit 82, and a storage unit 83.

The control unit 81 controls the communication unit 82 to communicate with the device 31, the air conditioner 33, and the temperature setting panel 34, and supplies sensing data from the device 31 and temperature setting information from the temperature setting panel 34 to the air conditioner 33.

The control unit 81 is implemented by, for example, a processing circuit such as a CPU or a GPU, a ROM, a RAM, or the like. Specifically, as illustrated in Fig. 4, the control unit 81 includes a communication destination transmission unit 91, a SceneMode transmission unit 92, a panel operation reception unit 93, a device information reception unit 94, and an information transmission unit 95.

The communication destination transmission unit 91 mainly executes response processing of a command including APIs such as GetManagementEndPoint, GetManagementObject, GetControlObject, and GetDateTime in the first task processing, and controls the communication unit 82 to send destination information as a communication destination to the device 31.

The SceneMode transmission unit 92 mainly executes the second task processing, acquires device determination condition 101 stored in the storage unit 83, and generates SceneMode information in response to a command including the API called GetSceneMode from the device 31. Then, the SceneMode transmission unit 92 controls the communication unit 82 to send the generated SceneMode information to the device 31.

The panel operation reception unit 93 mainly executes fourth task processing, acquires temperature setting information from the temperature setting panel 34, and records the temperature setting information in the storage unit 83 as the device determination condition 101.

The device information reception unit 94 mainly executes the third task processing, acquires sensing data by receiving a command including the APIs called SetSceneMark and SetSceneData from the device 31, and outputs the sensing data to the information transmission unit 95.

When the information transmission unit 95 mainly executes the fourth task processing and acquires sensing data from the device 31 supplied from the device information reception unit 94, the information transmission unit sends the sensing data to the air conditioner 33.

Since the communication unit 82 and the storage unit 83 basically have the same configuration as the communication unit 53 and the storage unit 54, the description thereof will be omitted.

<Configuration Example of Air Conditioner>

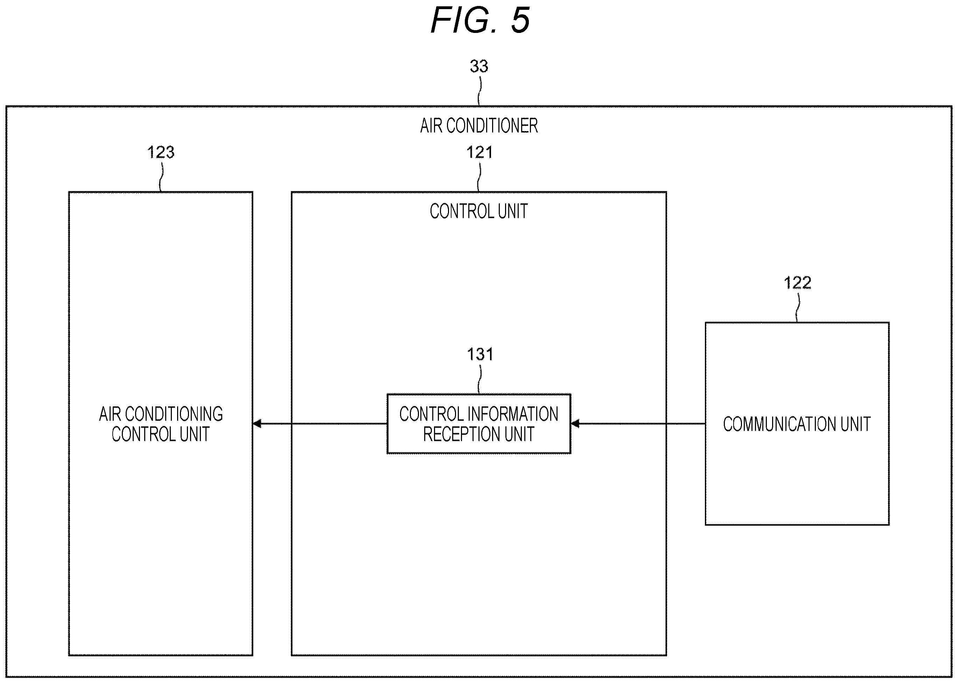

Next, a configuration example of the air conditioner 33 will be described with reference to Fig. 5. Fig. 5 is a block diagram illustrating a functional configuration example of the air conditioner 33 according to the present embodiment. Specifically, as illustrated in Fig. 5, the air conditioner 33 includes a control unit 121, a communication unit 122, and an air conditioning control unit 123. Note that the communication unit 122 basically has the same configuration as the communication units 53 and 82, and thus description thereof will be omitted.

The control unit 121 controls the communication unit 122, acquires information of the sensing data of the device 31 supplied from the server 32, and controls the air conditioning control unit 123. The control unit 121 is implemented by, for example, a processing circuit such as a CPU, a ROM, a RAM, and the like. Specifically, as illustrated in Fig. 5, the control unit 121 includes a control information reception unit 131.

The control information reception unit 131 acquires information of the sensing data of the device 31 and information of the set temperature of the temperature setting panel 34 supplied from the server 32 via the communication unit 122, controls the air conditioning control unit 123 on the basis of the sensing data and the information of the set temperature, and controls the temperature setting of the air conditioner 33.

<Configuration Example of Temperature Setting Panel>

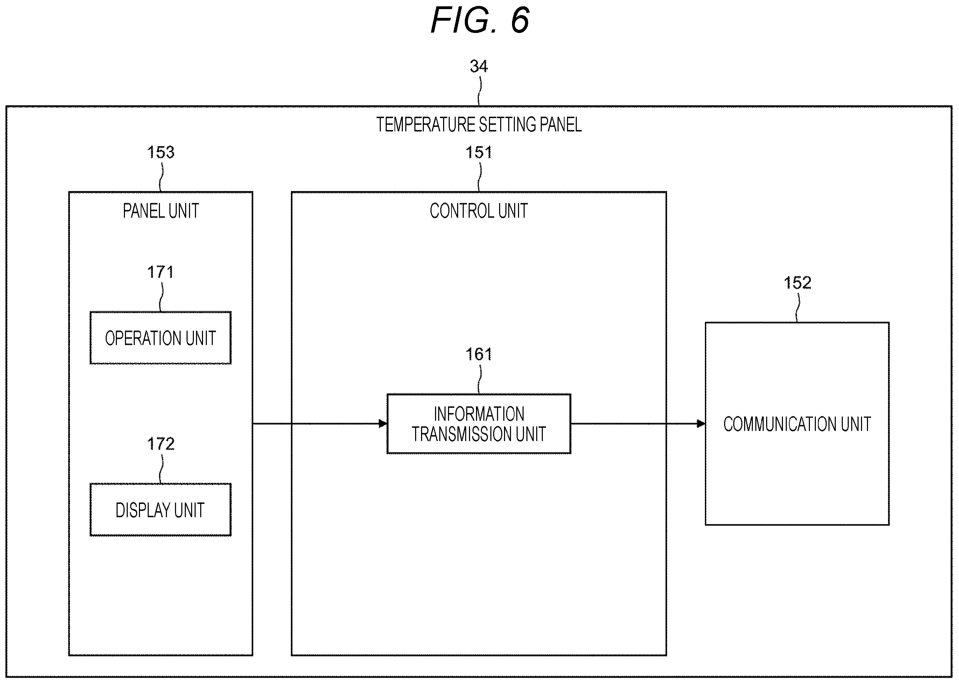

Next, a configuration example of the temperature setting panel 34 will be described with reference to Fig. 6. Fig. 6 is a block diagram illustrating a functional configuration example of the temperature setting panel 34 according to the present embodiment. Specifically, as illustrated in Fig. 6, the temperature setting panel 34 includes a control unit 151, a communication unit 152, and a panel unit 153. Note that the communication unit 152 basically has the same configuration as the communication units 53, 82, and 122, and thus description thereof will be omitted.

Upon acquiring the information of the set temperature from the panel unit 153, the control unit 151 controls the communication unit 152 to transmit the information to the server 32. The control unit 151 is implemented by, for example, a processing circuit such as a CPU, a ROM, a RAM, and the like. Specifically, as illustrated in Fig. 6, the control unit 151 includes an information transmission unit 161.

The information transmission unit 161 acquires information of the set temperature from the panel unit 153, and controls the communication unit 152 to supply the information to the server 32.

Upon receiving an operation input of a set temperature from the user, the panel unit 153 outputs information of the set temperature corresponding to the received operation input to the control unit 151.

More specifically, the panel unit 153 includes an operation unit 171 and a display unit 172. The operation unit 171 includes operation buttons, switches, and the like, outputs an operation signal corresponding to the operation input of the set temperature, and outputs the operation signal to the control unit 151 as information of the set temperature input by the user.

The display unit 172 includes a liquid crystal display (LCD), various operation lamps, and the like, and displays information of the current set temperature and information of the set temperature according to the operation input.

<SceneMode>

Next, a description of SceneMode will be described with reference to Fig. 7. Fig. 7 illustrates an example of description of SceneMode.

SceneMode defines a condition for sending sensing data acquired by the sensor unit 51 of the device 31 to the server 32.

The description in the third line of Fig. 7 clearly indicates that it is SceneMode in the NICE definition.

Furthermore, an identifier (TransducerID) of a sensor of the device 31 as a transmission source and an interval (TransmissionInterval) of a time at which sensing data is transmitted are defined by the descriptions of the fifth to seventh lines.

The device condition setting, which is the transmission condition of the sensing data of the device 31, is defined by the descriptions of the eighth to 21st lines (SceneModeConfig, line 8, and AnalysisStage, line 14).

More specifically, a lower limit value for determining sending of sensing data is designated by AnalysisThreshold on the 16th line, and an upper limit value for determining sending of sensing data is designated by AdditionalThreshold on the 17th line.

That is, in a case where the sensing data is the temperature, when 30 degrees is set as AnalysisThreshold, if the sensing data is equal to or more than 30 degrees designated as a lower limit value, it is determined to send the sensing data to the server 32. Furthermore, when 30 degrees is set as AdditionalThreshold, if the sensing data is equal to or less than 30 degrees that is the upper limit value specification, it is determined to send the sensing data to the server 32.

Furthermore, a specific value when it is determined that sensing data is to be sent is set by the EqualsThreshold in the 18th line, and values other than the specific value when it is determined that sensing data is to be sent are set by the NotEqualsThreshold in the 19th row.

That is, when 30 degrees is set as the EqualsThreshold, it is determined to send the sensing data to the server 32 only when the sensing data is 30 degrees that is a specific value. Furthermore, when 30 degrees is set as the NotEqualsThreshold, it is determined to send the sensing data to the server 32 when the sensing data is other than 30 degrees that is a value other than the specific value.

Moreover, in a case where the edge condition is set as the type of the condition for determining sending by DetectType on the 20th line, it is determined that sending is to be performed when a change in value across Analysis-Threshold or AdditionalThreshold occurs.

Furthermore, by TriggerDelay on the 21st line, a predetermined time required to continuously satisfy a threshold condition for determining sending in a case where DetectType is set as a level condition is defined.

In SceneMode, a condition for sending sensing data to the server 32 is defined, and thus it is sufficient if information is described in any one of the device condition settings.

<First Task Processing>

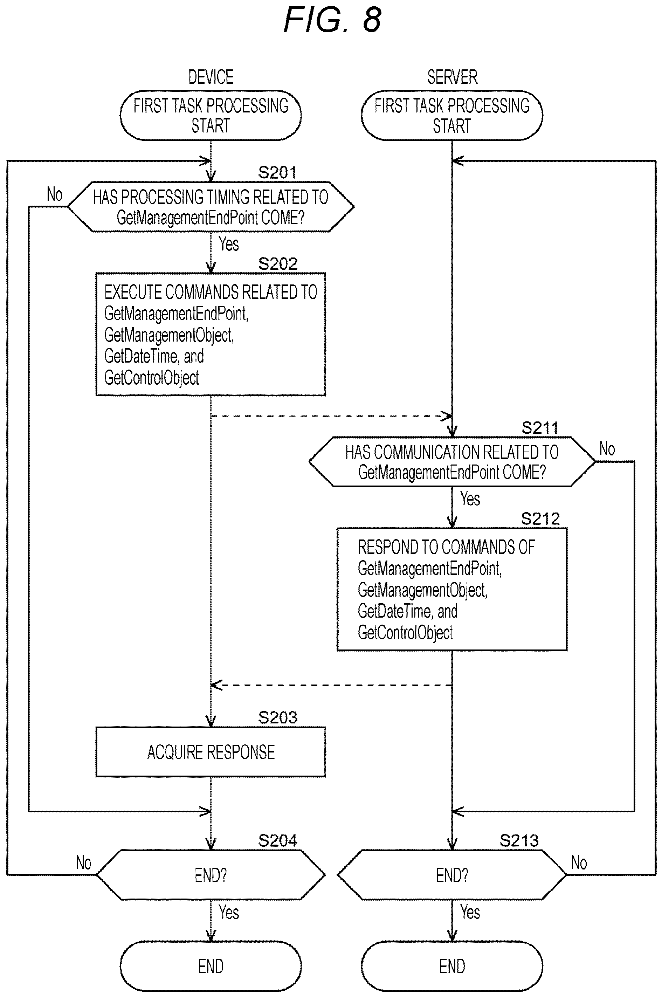

Next, the first task processing by the device 31 and the server 32 will be described with reference to a flowchart of Fig. 8.

In step S201, the communication destination acquisition unit 71 of the control unit 52 in the device 31 determines whether or not a processing timing related to the API of GetManagementEndPoint has come.

Then, in a case where it is determined in step S201 that the processing timing related to GetManagementEnd-Point has come, the processing proceeds to step S202.

In step S202, the communication destination acquisition unit 71 controls the communication unit 53 to execute commands of GetManagementEndPoint, GetManagementObject, GetDateTime, and GetControlObject for the server 32.

In response to this, in the server 32, in step S211, the communication destination transmission unit 91 controls the communication unit 82 to determine whether or not communication related to GetManagementEndPoint has come.

Then, in step S211, in a case where communication related to GetManagementEndPoint has come, the processing proceeds to step S212.

In step S212, the communication destination transmission unit 91 controls the communication unit 82 to transmit a response of a command of GetManagementEndPoint, GetManagementObject, GetDateTime, or GetControlObject to the device 31.

In step S203, the communication destination acquisition unit 71 controls the communication unit 53 to acquire destination information transmitted from the server 32, and stores the destination information in the storage unit 54 as the destination information 61.

Note that, in step S201, in a case where it is not the processing timing related to GetManagementEndPoint, the processing of steps S202 and S203 is skipped. Furthermore, in step S211, in a case where communication related to GetManagementEndPoint has not arrived, the processing of step S212 is skipped.

In steps S204 and S213, the communication destination acquisition unit 71 and the communication destination transmission unit 91 each determine whether or not an instruction to end the processing is given, and in a case where the instruction to end the processing is not given, the processing returns to steps S201 and S211, and the subsequent processing is repeated.

Then, in a case where the instruction to end is given in steps S204 and S214, the processing ends.

That is, the above processing is processing corresponding to the first task processing of Fig. 2, and by this processing, in the device 31, the destination information 61 acquired from the server 32 is stored in the storage unit 54.

<Second Task Processing>

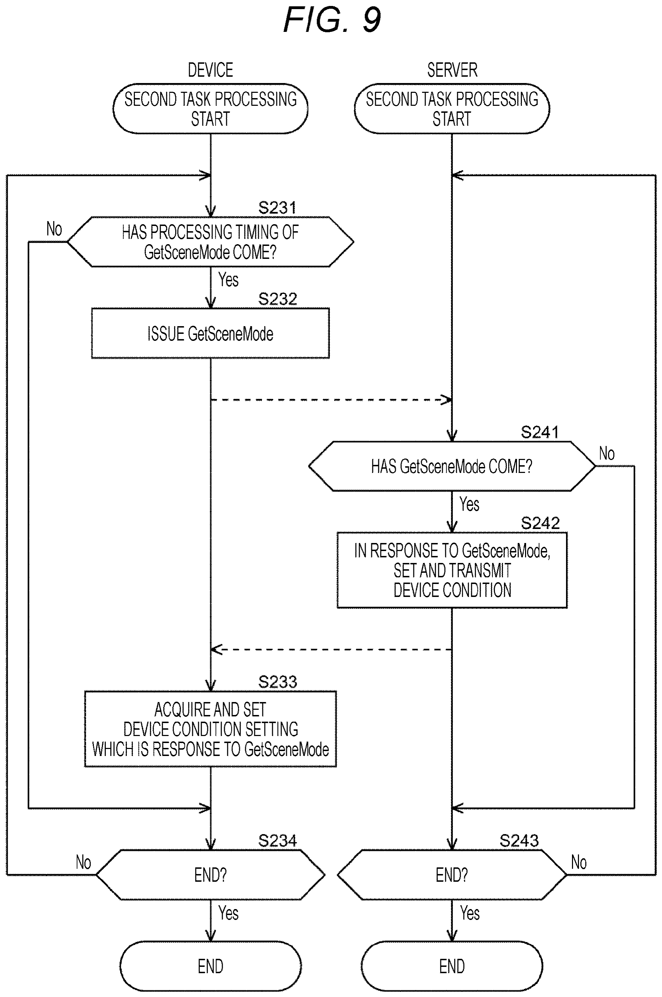

Next, the second task processing by the device 31 and the server 32 will be described with reference to a flowchart of Fig. 9.

In step S231, the SceneMode acquisition unit 72 of the control unit 52 in the device 31 determines whether or not a processing timing related to the API called GetSceneMode has come.

Then, in a case where it is determined in step S231 that the processing timing related to GetSceneMode has come, the processing proceeds to step S232.

In step S232, the SceneMode acquisition unit 72 issues a command of GetSceneMode, controls the communication unit 53, and transmits the command to the server 32.

In response to this, in the server 32, in step S241, the SceneMode transmission unit 92 controls the communication unit 82 to determine whether or not GetSceneMode has come.

Then, in step S241, in a case where GetSceneMode has come, the processing proceeds to step S242.

In step S242, the SceneMode transmission unit 92 accesses the storage unit 83, reads the device determination condition 101, sets the device condition on the basis of the device determination condition 101 as a response to the command of GetSceneMode, generates SceneMode as illustrated in Fig. 7 so as to reflect the device condition setting, controls the communication unit 82, and transmits the SceneMode to the device 31.

The device determination condition 101 includes information of the set temperature of the air conditioner 33 set by operating the temperature setting panel 34 by the fourth task processing to be described later. On the basis of the set temperature of the air conditioner 33 as the device determination condition, for example, when it is desired to reduce the communication frequency in a case where the set temperature is 25 degrees, the SceneMode transmission unit 92 sets the lower limit temperature to, for example, 30 degrees, which is about 5 degrees higher than the set temperature.

That is, if the control by the air conditioner 33 is appropriate, as long as it is set to 25 degrees, the possibility that the room temperature exceeds 30 degrees is low, and thus the communication frequency can be reduced. Furthermore, in this case, when 26 degrees is set as the lower limit temperature, there is a possibility that the frequency of exceeding the lower limit temperature becomes high during the day in the summer season. Accordingly, on the basis of the current set temperature of the air conditioner 33 included in the device determination condition 101, the SceneMode transmission unit 92 performs device condition setting assuming the frequency at which the transmission condition is satisfied, that is, the communication frequency, and reflects the device condition in SceneMode.

Note that the communication frequency may be set according to the state of the device 31. For example, the communication frequency may be controlled on the basis of the remaining battery amount of the device 31 or the body temperature of the battery, and for example, in a case where the remaining battery amount is small, the communication frequency may be reduced.

In addition, in a case where the line load of the communication line between the device 31 and the server 32 is higher than a predetermined value, the communication frequency may be set to be reduced.

Moreover, the device 31 having a low communication fee may increase the communication frequency by loosening a threshold or the like.

In addition, in the control of the communication frequency, a change in the processing balance between the server and the edge may be considered in addition to the threshold determination.

Moreover, regarding the control, in addition to the control defined in SceneMode described with reference to Fig. 7, for example, device condition setting may be performed so that communication is started when the angle exceeds 30 degrees and then communication is stopped when the angle falls below 25 degrees.

In addition, device condition setting may be performed so that communication is performed when the temperature of the surrounding environment of the sensing data is about 30°C and a rapid temperature rise is started at a predetermined rate or more.

Moreover, SetSceneMark may be issued when the device 31 stores a reference temperature rise rate from the characteristics of its own temperature sensor or the like, and the temperature rise rate of the actual surrounding environment rises more rapidly than the reference temperature rise rate.

In step S233, the SceneMode acquisition unit 72 controls the communication unit 53 to acquire SceneMode for which the device condition is set, which is a response to the GetSceneMode command transmitted from the server 32, and stores the SceneMode in the storage unit 54 as the SceneMode information 62.

Note that, in step S231, in a case where it is not the processing timing related to GetSceneMode, the processing of steps S232 and S233 is skipped. Furthermore, in step S241, in a case where GetSceneMode does not come, the processing of step S242 is skipped.

In steps S234 and S243, the SceneMode acquisition unit 72 and the SceneMode transmission unit 92 each determine whether or not an instruction to end the processing is given, and in a case where the instruction to end the processing is not given, the processing returns to steps S231 and S241, and the subsequent processing is repeated.

Then, in a case where the instruction to end is given in steps S234 and S243, the processing ends.

The above processing is processing corresponding to the second task processing of Fig. 2, and by this processing, in the device 31, SceneMode for which the device condition is set and which is acquired from the server 32 is stored in the storage unit 54 as the SceneMode information 62. That is, in the device 31, the communication frequency is controlled thereafter on the basis of the device condition setting described in the description of SceneMode stored as the SceneMode information 62.

<Third Task Processing>

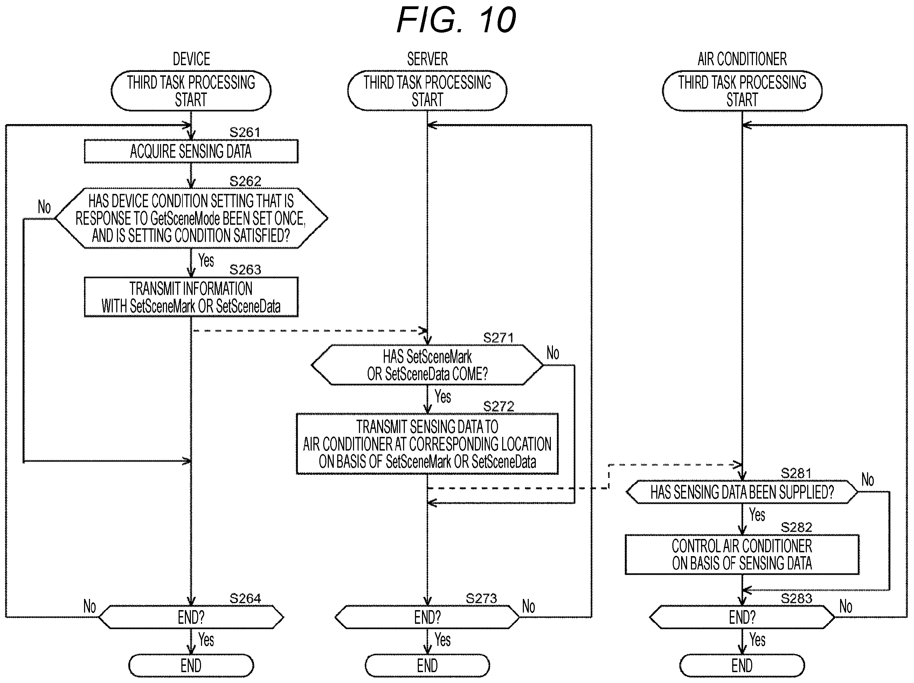

Next, the third task processing by the device 31, the server 32, and the air conditioner 33 will be described with reference to a flowchart of Fig. 10.

In step S261, the data processing unit 73 of the control unit 52 in the device 31 acquires, for example, temperature information and an infrared image as the sensing data supplied from the sensor unit 51, and outputs them to the condition determination unit 74.

In step S262, the condition determination unit 74 accesses the storage unit 54, searches for the SceneMode information 62 as a response to GetSceneMode, and determines whether or not the SceneMode information 62 has been acquired at least once and the device condition setting has been made, and the acquired sensing data satisfies the device condition setting.

Then, in step S262, in a case where it is determined that the SceneMode information 62 has been acquired at least once and the device condition setting has been made, and the acquired sensing data satisfies the device condition setting, the processing proceeds to step S263.

In step S263, the condition determination unit 74 outputs the sensing data to the information transmission unit 75 and instructs transmission of the sensing data. In response to this, the information transmission unit 75 generates SetSceneMark or SetSceneData on the basis of the sensing data, and controls the communication unit 53 to send the SetSceneMark or SetSceneData to the server 32.

Note that, in step S262, in a case where the SceneMode information 62 has never been acquired, or the device condition setting has not been made, or the acquired sensing data does not satisfy the device condition setting, the processing of step S263 is skipped.

In step S271, the device information reception unit 94 of the control unit 81 in the server 32 controls the communication unit 82 to determine whether or not SetSceneMark or SetSceneData has been received from the device 31.

Then, in step S271, in a case where it is determined that SetSceneMark or SetSceneData is received from the device 31, the processing proceeds to step S272.

In step S272, the device information reception unit 94 controls the communication unit 82 to acquire SetSceneMark or SetSceneData, extracts included sensing data, and outputs the extracted sensing data to the information transmission unit 95. Then, the information transmission unit 95 controls the communication unit 82 to transmit the sensing data to the air conditioner 33.

Note that in a case where it is determined in step S271 that SetSceneMark or SetSceneData is not the drawing state St3, the processing of step S272 is skipped.

In step S281, the control information reception unit 131 of the control unit 121 in the air conditioner 33 controls the communication unit 122 to determine whether or not sensing data of the device 31 has been transmitted from the server 32.

Then, in a case where it is determined in step S281 that the sensing data of the device 31 is transmitted from the server 32, the processing proceeds to step S282.

In step S282, the control information reception unit 131 controls the air conditioning control unit 123 on the basis of the sensing data supplied from the server 32 via the communication unit 122 and the set temperature corresponding to the operation content of the temperature setting panel 34 to control the set temperature.

Note that in a case where the sensing data of the device 31 is not transmitted from the server 32 in step S281, the processing of step S282 is skipped.

In steps S264, S273, and S283, the condition determination unit 74, the device information reception unit 94, and the control information reception unit 131 each determine whether or not an instruction to end the processing is given, and in a case where the instruction to end the processing is not given, the processing returns to steps S261, S271, and S281, and the subsequent processing is repeated.

Then, in a case where the instruction to end is given in steps S264, S273, and S283, the processing ends.

That is, the above processing is processing corresponding to the third task processing of Fig. 2, and by this processing, in the device 31, SetSceneMark or SetSceneData including sensing data is transmitted only when the transmission condition is satisfied on the basis of the device condition setting defined by the SceneMode information 62 acquired from the server 32.

Thus, the communication frequency of the device 31 to the server 32 is controlled, and thus, for example, communication at the communication frequency based on the device condition setting is implemented.

That is, for example, by setting the device condition setting so that the transmission condition is hardly satisfied, the communication frequency can be reduced.

<Fourth Task Processing>

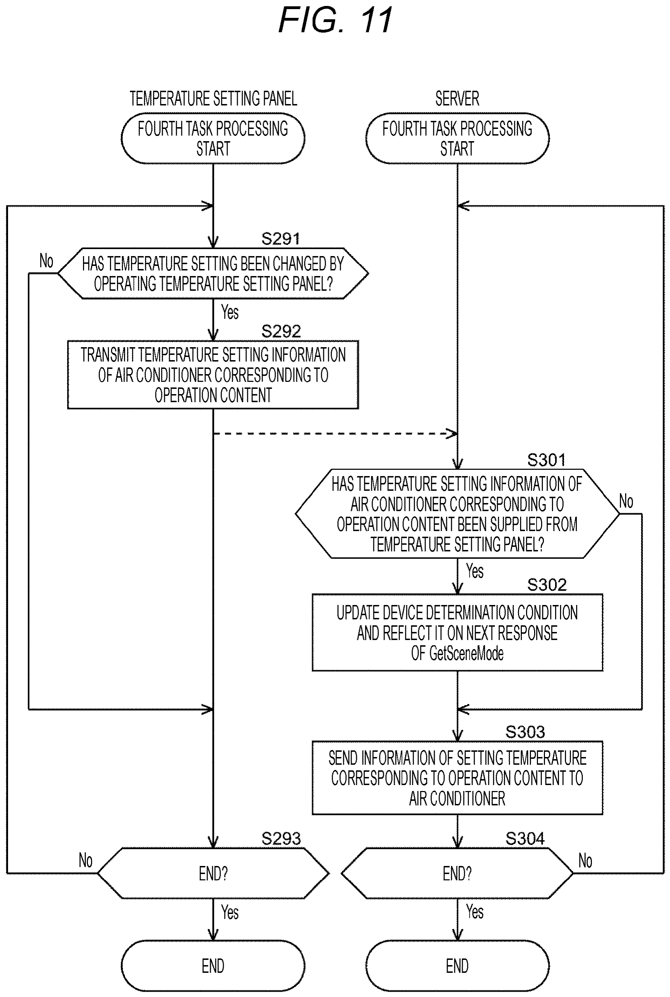

Next, the fourth task processing by the temperature setting panel 34 and the server 32 will be described with reference to a flowchart of Fig. 11.

In step S291, the information transmission unit 161 of the control unit 151 in the temperature setting panel 34 controls the panel unit 153 to determine whether or not the operation unit 171 has been operated and the temperature setting has been changed.

In a case where it is determined in step S291 that the operation unit 171 has been operated and the temperature setting has been changed, the processing proceeds to step S292.

In step S292, the information transmission unit 161 controls the communication unit 152 to transmit the temperature setting information changed by the operation signal corresponding to the operation content of the operation unit 171 of the panel unit 153 to the server 32.

Note that in a case where the operation unit 171 is not operated and the temperature setting is not changed in step S291, the processing of step S292 is skipped.

In step S301, the panel operation reception unit 93 of the control unit 81 in the server 32 controls the communication unit 82 to determine whether or not the temperature setting information has been supplied from the temperature setting panel 34.

In a case where it is determined in step S301 that the temperature setting information has been supplied from the temperature setting panel 34, the processing proceeds to step S302.

In step S302, the panel operation reception unit 93 controls the communication unit 82 to acquire the temperature setting information from the temperature setting panel 34, update the device determination condition 101, and reflect the temperature setting information in the next response of GetSceneMode.

Note that in a case where the temperature setting information is not supplied from the temperature setting panel 34 in step S301, the processing of step S302 is skipped.

In step S303, the panel operation reception unit 93 controls the communication unit 82 to transmit the temperature setting information to the air conditioner 33. In this manner, the control information reception unit 131 of the air conditioner 33 acquires and stores the temperature setting information as control information, and controls the air conditioning control unit 123 together with the sensing data supplied thereafter.

In steps S293 and S304, the information transmission unit 161 and the panel operation reception unit 93 each determine whether or not an instruction to end the processing is given, and in a case where the instruction to end the processing is not given, the processing returns to steps S291 and S301, and the subsequent processing is repeated.

Then, in a case where the instruction to end is given in steps S293 and S304, the processing ends.

That is, the above processing is processing corresponding to the fourth task processing of Fig. 2, and by this processing, when the temperature setting panel 34 is operated, the temperature setting information corresponding to the operation content is supplied to the server 32, the device determination condition 101 that defines the device condition setting is updated, and used for generation of SceneMode that is a response of the next GetSceneMode. Furthermore, the temperature setting information is supplied to the air conditioner 33 and used for air-conditioning control.

The air conditioner control system that controls the air conditioner using the temperature as the sensor value detected by the device 31 including the temperature sensor using the APIs defined in the NICE standard has been described above.

However, the sensor provided in the device may be a sensor other than the temperature sensor, and for example, the system may be applied to a system that monitors a congestion situation by detecting a vehicle speed as a sensor value by a device including a vehicle speed sensor and transmitting sensing data including the detected vehicle speed to a server to manage vehicle speed information.

In this case, for example, the communication frequency with the server may be reduced by transmitting the vehicle speed as the sensor value to the server as the sensing data only when the vehicle speed as the sensor value of the vehicle speed sensor exceeds a vehicle speed set as the lower limit value.

In addition, the system may be applied to a system in which a sensor provided in a device detects position information as a sensor value by a device including a global positioning system (GPS) sensor, and transmits sensing data including the detected position information to a server, and the system manages position information of users carrying the device and monitors a congestion situation.

In this case, for example, on the basis of position information that is a sensor value of a GPS sensor, the position information that is the sensor value may be transmitted to the server as sensing data only when the moving distance from the position where the position information has been transmitted to the server immediately before exceeds a moving distance set as the lower limit value, to thereby reduce the communication frequency with the server.

<<2. Modifications>>

Although the example in which the server 32 transmits SceneMode to the device 31 as a response on the basis of GetSceneMode from the device 31 has been described above, the server 32 may directly supply SceneMode without waiting for a request from the device 31 by a command including an API called SetSceneMode.

The API called SetSceneMode is an API for setting SceneMode. That is, GetSceneMode is an API that requests setting of SceneMode, and when this is supplied from the device 31, the server 32 sets SceneMode to the device 31 as a response to GetSceneMode. However, SetSceneMode is an API for setting SceneMode even in a state where there is no request such as GetSceneMode. Therefore, here, the server 32 sets SceneMode to the device 31 by an API called SetSceneMode.

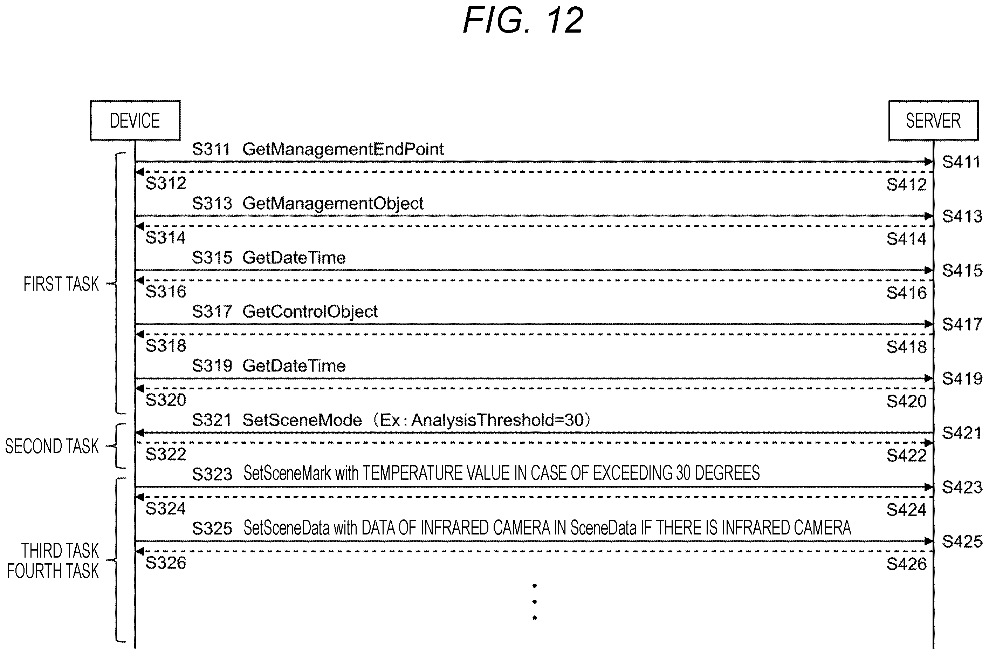

Fig. 12 is a sequence diagram illustrating processing in a case where the server 32 sets SceneMode to the device 31 by an API called SetSceneMode.

Note that the processing of steps S311 to S320 and the processing of steps S411 to S420 in Fig. 12 are the first task processing. The processing of steps S321 and S322 and the processing of steps SS421 and S422 are the second task processing. The processing of steps S323 to S326 and the processing of steps S423 to S425 are the third task processing and the fourth task processing.

Since the first task, the third task, and the fourth task in Fig. 12 are similar to the processing described with reference to the sequence diagram in Fig. 2, the description thereof will be omitted.

That is, in Fig. 12, what is different from Fig. 2 is the second task.

In step S421 in the second task processing, the SceneMode transmission unit 92 of the control unit 81 in the server 32 accesses the storage unit 83, reads the device determination condition 101, performs device condition setting on the basis of the device determination condition 101 according to the command of SetSceneMode, generates SceneMode as illustrated in Fig. 7 so as to reflect the device condition setting, controls the communication unit 82, and transmits the SceneMode to the device 31.

In step S321, the SceneMode acquisition unit 72 controls the communication unit 53 to acquire SceneMode for which the device condition setting is performed on the basis of SetSceneMode transmitted from the server 32, and stores the SceneMode in the storage unit 54 as the SceneMode information 62.

Then, in step S322, the SceneMode acquisition unit 72 transmits reception confirmation of SetSceneMode to the server 32.

In response to this, in step S422, the SceneMode transmission unit 92 receives the reception confirmation.

Through the above processing, similarly to the second task processing of Fig. 2, in the device 31, SceneMode for which the device condition setting is performed and which is acquired from the server 32 is stored in the storage unit 54 as the SceneMode information 62. That is, in the device 31, hereinafter, the communication frequency is controlled on the basis of the device condition setting of the SceneMode information 62.

<<3. Second Embodiment>>

<Configuration Example of Air Conditioner Control System Including Device Capable of Ad-Hoc Communication>

The example in which the device 31 determines whether or not to transmit the sensing data to the server 32 on the basis of the device condition setting defined in SceneMode has been described above. However, in this case, since the determination based on the sensing data of the plurality of devices is necessarily performed by the server 32, not only the load on the communication line increases but also the processing load of the server 32 increases.

Accordingly, ad-hoc communication may be performed between devices, and after determination based on sensing data is made between the devices, whether or not to transmit the sensing data to the server 32 may be comprehensively determined and then the sensing data may be transmitted to the server 32, thereby reducing the communication frequency.

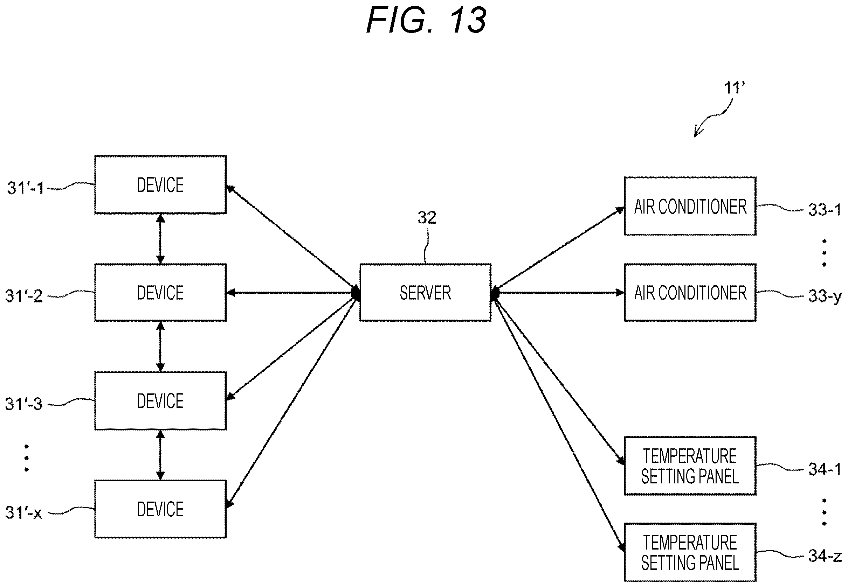

Fig. 13 illustrates a configuration example of an air conditioner control system 11' in which ad-hoc communication is performed between devices.

Note that, in the air conditioner control system 11' of Fig. 13, components having the same functions as those of the air conditioner control system 11 of Fig. 1 are denoted by the same reference numerals, and the description thereof will be appropriately omitted.

The air conditioner control system 11' in Fig. 13 is different from the air conditioner control system 11 in Fig. 1 in that a device 31' capable of ad-hoc communication is provided instead of the device 31.

Moreover, the device 31' has the same basic function as the device 31, but is further configured to enable ad-hoc communication between other devices 31'. When ad-hoc communication is established, one of the plurality of devices 31' is set as a representative device on the basis of mutual capability parameters, and the others are set as dependent devices.

Then, the representative device collects sensing data from the dependent devices, performs statistical processing such as obtaining an average value of the sensing data of the plurality of devices 31', performs transmission determination to the server 32 on the basis of SceneMode, and transmits the sensing data to the server 32 when the transmission condition is satisfied.

As a result, since communication with the server 32 is performed only by the representative device, the frequency of communication between the device 31' and the server 32 can be reduced, and a communication load, power consumption, and a communication fee can be reduced.

<Outline of Operation of Air Conditioner Control System in Fig. 13>

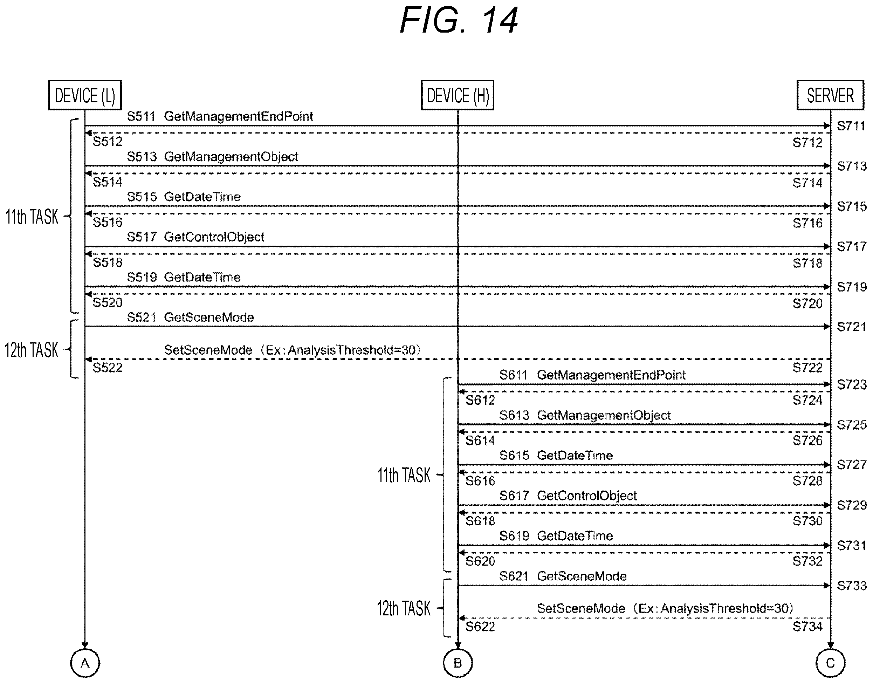

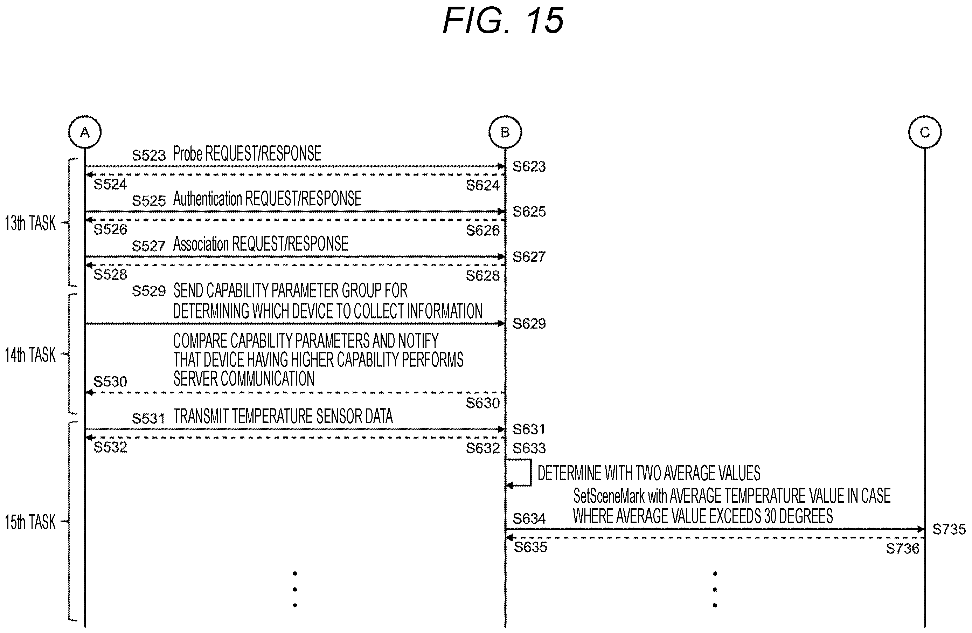

Next, the outline of the operation of the air conditioner control system 11' in Fig. 13 will be described with reference to timing charts of Figs. 14 and 15.

Note that, in the timing charts of Figs. 14 and 15, operations of the two devices 31' and the server 32 will be described, and processing of the first device, the second device, and the server is described from the left in the drawing.

Here, in determining a representative device and a dependent device to be described later, it is assumed that there are two devices 31' having different processing capabilities, and hence a device 31' having a high processing capability is denoted as a "device (H)" in the drawing, and processing is described in the center of the drawing. Conversely, the device 31' having a low processing capability is denoted as a "device (L)", and processing is described in the left part in the drawing.

Note that the operation including the air conditioner 33 and the temperature setting panel 34 is similar to the processing described above, and thus the description thereof will be omitted.

In the operation of air conditioner control system 11' in Fig. 13, as illustrated in the left part of Figs. 14 and 15, processing is performed in order of an 11th task, a 12th task, a 13th task, a 14th task, and a 15th task from the top.

The 11th task and the 12th task in Fig. 14 are the same task processing as the first task and the second task in Fig. 2, respectively, and thus the description thereof will be omitted.

That is, in Fig. 14, both the device (H) 31' and the device (L) 31' acquire destination information by communication with the server 32, synchronize the times, and acquire SceneMode.

Therefore, the processing of steps S511 to S522, the processing of steps S711 to S722, the processing of steps 611 to S622, and the processing of steps S723 to S734 correspond to the processing of steps S11 to S22 and the processing of steps S111 to 122 in Fig. 2, respectively.

The 13th task in Fig. 15 is processing of establishing ad-hoc communication between the device (H) 31' and the device (L) 31'.

The 14th task is a processing task of determining a representative device and a dependent device between the device (H) 31' and the device (L) 31' for which the ad-hoc communication is established on the basis of the capability parameter. Note that, in this example, the device (H) 31' serves as a representative device, and the device (L) 31' serves as a dependent device.

In the 15th task, the device (H) 31' serving as the representative device acquires sensing data of a temperature of the device (L)' serving as the dependent device, and integrates the acquired sensing data together with sensing data of the device (H) 31' as an average value, for example. Then, the device (H) 31' as the representative device determines whether or not to transmit the integrated sensing data to the server 32 on the basis of the device condition setting of the SceneMode information, and transmits the average value of the sensing data to the server 32 when a transmission condition is satisfied.

More specifically, in steps S523 and S524 and steps S623 and S624, the device 31' (L) (or device 31' (H)) performs a Probe Request/Response (probe request/response), which is a request for inquiring the device 13' (H) (or the device 31' (L)) whether or not the device itself is connectable thereto, and response processing thereof, on the basis of the beacon frame.

In steps S525 and S526 and steps S625 and S626, the device 31' (L) and the device 31' (H) execute an Authentication Request/Response (authentication request/response) which is a request for authentication using an authentication method for which determination as to whether or not connection is permitted is set in advance and a response process thereof.

In steps S527 and S528 and steps S627 and S628, when the device 31' (L) and the device 31' (H) are determined to be connectable devices on the basis of the authentication result, the device 31' (L) and the device 31' (H) execute a connection request from the device' (H) to the device 31' (H) and Association Request/Response (association request/response) which is response processing thereof.

The processing of steps S523 to S528 and the processing of steps S623 to S628 described above are processing of the 13th task, and ad-hoc communication between the device 31' (L) and the device 31' (H) is established by a series of processing of the 13th task, and a state in which mutual communication is possible is obtained.

In steps S529 and S629, the device 31' (L) and the device 31' (H) transmit a capability parameter group indicating various capabilities to each other in order to determine which device to collect sensing data. Note that, in Fig. 15, an arrow is drawn as processing in which the device 31' (L) transmits a capability parameter to the device 31' (H), but this is processing performed by both the devices.

In steps S630 and S530, for example, when the device 31' (H) determines that the capability is comprehensively higher than the device 31' (L) from various capabilities on the basis of comparison of the capability parameter group, the device 31' (L) is notified that the device 31' (H) becomes a representative device that collects sensing data. At this time, any device 31' other than the representative device is a dependent device that transmits the sensing data to the representative device.

The capability parameter is a parameter indicating various processing capabilities of the device 31', and is, for example, a calculation capability, a remaining battery amount, a thermal state of the device main body, a heat dissipation capability, calculation efficiency (calculation amount per unit energy or calorific value: note that the calorific value can be calculated from the calculation amount), a communication speed and a latency to the server 32, a communication fee per data at the time of communication to the server 32, a security level (secure communication level, encryption level, and the like) usable for server communication, or the like.

On the basis of these capability parameters, for example, among the plurality of devices 31', at least one of a device with high calculation capability, a device with a large remaining battery amount, a device with good thermal state, a device with high heat dissipation capability, a device with high computation efficiency, a device with high communication speed to the server 32, a device with low communication latency to the server 32, a device with low communication fee per data at the time of communication to the server 32, or a device with a high security level (secure communication level, encryption level, and the like) available for server communication may be selected as the representative device.

Here, a capability score for each device 31' may be obtained using a plurality of types of capability parameters, and the device 31' having the largest ability score may be set as the representative device.

The capability score may be, for example, defined by the following Formula (1) on the basis of various processing capabilities in the device 31'.

$$Sc = a \times P + b \times B + c \times H + d \times D + e \times E + f \times T + g \times L + h \times C + i \times S \quad ...(1)$$

Here, Sc is a capability score, P is a calculation capability, B is a remaining battery amount, H is a thermal state, D is a heat dissipation capability, E is a calculation efficiency, T is a communication speed to the server 32, and L is a communication latency to the server 32. Further, C is a communication fee per data at the time of communication to the server 32, S is a security level that can be used for communication to the server 32, and a, b, c, d, e, f, g, h, and i are predetermined coefficients.

Note that Formula (1) is a linear combination formula of the calculation capability P, the remaining battery amount B, the thermal state H, the heat dissipation capability D, the calculation efficiency E, the communication speed T to the server 32, the communication latency L to the server 32, the communication fee C per data at the time of communication to the server 32, and the security level S that can be used for communication to the server 32, but may be a nonlinear combination formula.

Here, the description returns to the timing chart of Fig. 15.

When the representative device and the dependent device are set by the 14th task, the 15th task is performed.

The 15th task is processing corresponding to the third task in Fig. 2, and in step S531, the device 31' (L) as the dependent device performs transmission to the device 31' (H) as the information representative device for the temperature to be the sensing data of the temperature sensor.

In step S631, the device 31' (H) as the representative device acquires temperature information as sensing data transmitted from the device 31' (L), and in step S632, transmits a reception confirmation to the device 31' (L). In step S532, the device 31' (L) receives the reception confirmation from the device 31' (H).

In step S633, the device 31' (H) calculates an average temperature value of the temperature that is its own sensing data and the temperature that is the sensing data of the device 31' (L). Note that, here, the average of the sensing data is used, but if integration is possible, integration with other values may be performed, and for example, a weighted average may be used, or a larger value or a smaller value may be used.

In step S634, for example, in a case where 30 degrees is set as the lower limit temperature specified in SceneMode, when the calculated average temperature value exceeds 30 degrees, the device 31' (H) transmits information of the average temperature value of the temperatures that are the sensing data of the device 31' (H) and the device 31' (L) to the server 32 using a command including an API called SetSceneMark. Note that, although not illustrated, by the API called SetSceneData, for example, the representative device may collect an infrared image or the like from the dependent device and transmit at least one of the infrared image or the like to a server.

In step S735, the server 32 receives the average temperature value that is the sensing data, and in step S736, transmits a reception confirmation to the device 31' (H).

In step S635, the device 31' (H) receives the reception confirmation from the server 32.

Note that, hereinafter, the processing of steps S531 and S532 and steps S631 to S633 is repeated, and the processing of calculating the average temperature value of the temperatures that are the sensing data of the device 31' (H) and the device 31' (L) is repeated.

Then, in a case where the calculated average temperature value of the sensing data of the device 31' (H) and the device 31' (L) satisfies the condition defined in SceneMode, the device 31' (H) as the representative device transmits the average temperature value as the sensing data to the server 32 by the processing of steps S634 and S635 and steps S735 and S736.

Through the above processing, the communication between the device 31' and the server 32 is relatively long-distance communication via the base station, and the communication load and the communication fee are large, whereas the ad-hoc communication between the devices 31' is assumed to be relatively short-distance communication, and thus the communication load and the communication fee are small.

Therefore, between the devices 31', the sensing data is collected in the representative device by the ad-hoc communication with low load and low charge, and only the representative device communicates with the server 32 with high load and high charge, so that the communication load and the communication fee of the entire air conditioner control system 11' can be reduced.

In particular, since only the representative device communicates with the server 32, by considering the communication fee in selecting the representative device, for example, the device 31' having the lowest communication fee becomes the representative device, whereby the communication fee can be reduced.

Furthermore, since the necessity of transmission to the server 32 is determined on the basis of the sensing data of the plurality of devices 31', transmission of an outlier and the like to the server 32 is suppressed, and thus the sensing data that becomes an outlier is not transmitted to the air conditioner 33. In this manner, the set temperature of the air conditioner 33 can be appropriately controlled, the unnecessary communication amount can be reduced, and the processing load of both the device 31' and the server 32 can be reduced.

Furthermore, since the load related to individual communication of the device 31' is reduced, it is possible to increase the battery duration and expand the application range of the device. Moreover, even in the IoT device that can be used for the same application program, a smaller battery can be adopted, so that it is possible to implement downsizing of the IoT device itself.

Since the communication load can be reduced, the communication fee can also be reduced, and the reinforcement cost of the server 32 can be suppressed even if the entire system is scaled up.

Since the devices 31' can appropriately perform connection communication by ad-hoc communication, it is not necessary to perform detailed setting (location information or the like) between the devices 31' in advance, and thus, it is possible to easily implement a control system in which a communication load and a communication fee are suppressed.

<Configuration Example of Device in Fig. 13>

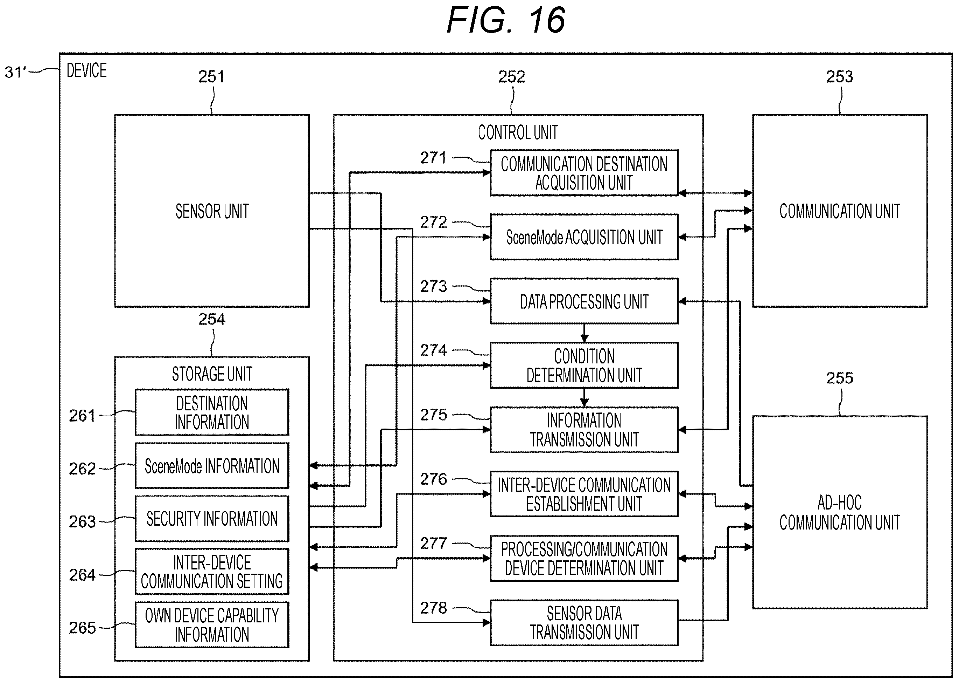

Next, with reference to Fig. 16, a configuration example of the communication device 31' will be described. Fig. 16 is a block diagram illustrating a functional configuration example of the device 31' according to the present embodiment. Specifically, as illustrated in Fig. 16, the device 31' includes a sensor unit 251, a control unit 252, a communication unit 253, a storage unit 254, and an ad-hoc communication unit 255. Note that the sensor unit 251 and the communication unit 253 have the same functions as the sensor unit 51 and the communication unit 53 in Fig. 3, and thus, description thereof is omitted.

The control unit 252 has a function of processing the sensing data acquired by the sensor unit 251, controlling the communication unit 253, and transmitting the sensing data to the server 32. The control unit 252 is implemented by, for example, a processing circuit such as a CPU, a ROM, a RAM, and the like. Specifically, as illustrated in Fig. 16, the control unit 252 includes a communication destination acquisition unit 271, a SceneMode acquisition unit 272, a data processing unit 273, a condition determination unit 274, an information transmission unit 275, an inter-device communication establishment unit 276, a processing/communication device determination unit 277, and a sensor data transmission unit 278.

Note that the communication destination acquisition unit 271 and the SceneMode acquisition unit 272 have configurations having the same functions as the communication destination acquisition unit 71 and the SceneMode acquisition unit 72 in Fig. 3, respectively, and thus description thereof is omitted.

In a case of being the representative device, the data processing unit 273 has a basic function similar to that of the data processing unit 73 in Fig. 3, and mainly executes the above-described 15th task processing, acquires the temperature that is sensing data from the sensor unit 251 and the sensing data from the dependent device, performs integration processing so as to obtain, for example, an average value, and outputs the result to the condition determination unit 274.

In a case of being the representative device, the condition determination unit 274 has a basic function similar to that of the condition determination unit 74 in Fig. 3, and mainly executes the above-described 15 task processing, reads the SceneMode information 62 in the storage unit 254, acquires device condition settings on the basis of the description of SceneMode that is SceneMode information 262, and determines whether or not the transmission condition of the sensing data is satisfied on the basis of the average value of the sensing data from the data processing unit 273. Then, in a case where the sensing data satisfies the transmission condition, the condition determination unit 274 outputs a transmission instruction of the sensing data to the information transmission unit 275.

In a case of being the representative device, the information transmission unit 275 has a basic function similar to that of the information transmission unit 75, and mainly executes the above-described 15th task processing, and upon receiving a transmission instruction from the condition determination unit 274, the information transmission unit 275 executes a command including an API such as SetSceneMark or SetSceneData, acquires destination information 261 from the storage unit 254, controls the communication unit 282, and sends the sensing data supplied from the condition determination unit 274 to the server 32.

The inter-device communication establishment unit 276 controls the ad-hoc communication unit 255 to establish ad-hoc communication with the device 31' capable of communicating in a relatively short distance. At that time, the inter-device communication establishment unit 276 reads security information 263 from the storage unit 254 to establish communication, and records information regarding the inter-device communication setting after the communication is established as inter-device communication setting 264.

The processing/communication device determination unit 277 reads own device capability information 265 including the capability parameter and the like from the storage unit 254, controls the ad-hoc communication unit 255 to exchange information between the devices 31', determines which device 31' is the representative device that processes the sensing data and communicates with the server 32, and stores/communicatively outputs a determination result.

In a case where the sensor data transmission unit 278 is not the representative device but the dependent device, the sensor data transmission unit acquires the sensing data supplied from the sensor unit 251, and controls the ad-hoc communication unit 255 to periodically send the sensing data to the device 31' to be the representative device.

The storage unit 254 stores the destination information 261, the SceneMode information 262, the security information 263, the inter-device communication setting 264, and own device capability information 265, and stores programs, information, and the like for the control unit 252 to execute various types of processing, and information obtained by the processing. The storage unit 54 is implemented by, for example, a storage device such as a hard disk drive (HDD).

The ad-hoc communication unit 255 is controlled by the control unit 252, and implements ad-hoc communication with another device 31' at a relatively short distance.

<13th Task Processing>

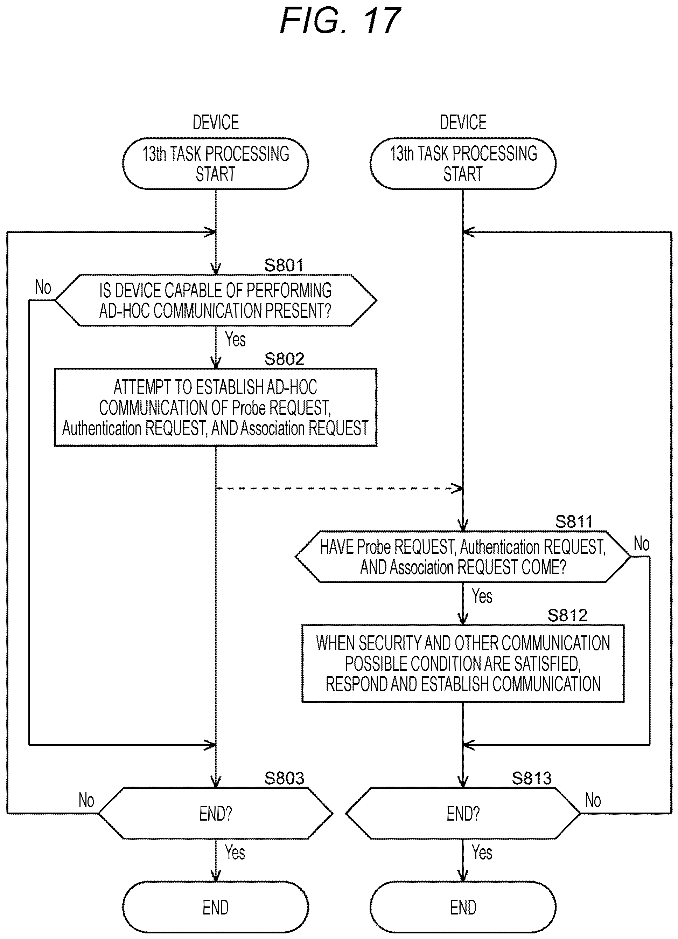

Next, the 13th task processing between the devices 31' will be described with reference to a flowchart of Fig. 17. Note that the 11th task and the 12th task are processes similar to those of the first task and the second task described above, and thus description thereof will be omitted.

In step S801, the inter-device communication establishment unit 276 controls the ad-hoc communication unit 255 to determine whether or not another device 31' capable of performing ad-hoc communication is present in the vicinity on the basis of, for example, a beacon frame or the like.

In a case where it is determined in step S801 that another device 31' capable of performing ad-hoc communication is present in the vicinity, the processing proceeds to step S802.

In step S802, the inter-device communication establishment unit 276 transmits a Probe Request (probe request), an Authentication Request (authentication request), and an Association Request (association request) to another device 31' existing in the vicinity, and attempts to establish ad-hoc communication. At this time, the inter-device communication establishment unit 276 reads the security information 263 in the storage unit 254 and transmits the security information to another device 31'.

Note that, in a case where it is determined in step S801 that there is no other device 31' that can perform ad-hoc communication in the vicinity, the processing of step S802 is skipped.

Here, in step S811, in the device 31' requested to establish ad-hoc communication, the inter-device communication establishment unit 276 controls the ad-hoc communication unit 255 to determine whether or not there is a Probe Request (probe request), an Authentication Request (authentication request), and an Association Request (association request) from the other device 31'.

In a case where there are a Probe Request (Probe Request), an Authentication Request (Authentication Request), and an Association Request (Association Request) in step S811, the processing proceeds to step S812.

In step S812, in a case where the information of the security information 263 transmitted together with the Probe Request (probe request), the Authentication Request (authentication request), and the Association Request (association request) or other communication possible conditions are satisfied, the inter-device communication establishment unit 276 responds to the Probe Request (probe request), the Authentication Request (authentication request), and the Association Request (association request), and establishes ad-hoc communication. At this time, the inter-device communication establishment unit 276 stores information related to the inter-device communication setting in the storage unit 254 as the inter-device communication setting 264.

Note that, in a case where there are no Probe Request (probe request), Authentication Request (authentication request), and Association Request (association request) in step S811, the processing of step S812 is skipped.

In steps S803 and S813, the inter-device communication establishment unit 276 determines whether or not an instruction to end the processing is given, and in a case where the instruction to end the process is not given, the processing returns to steps S801 and S811, and the subsequent processing is repeated.

Then, in a case where the instruction to end is given in steps S803 and S813, the processing ends.

Through the above processing, the 13th task processing is performed, and the ad-hoc communication between the devices 31' is established.

Note that, in Fig. 17, a flowchart illustrating processing of the device 31' is illustrated on both left and right, but processing of the both is performed with another device 31', and processing of the both left and right is processing performed independently in the same device 31'.

<14th Task Processing>

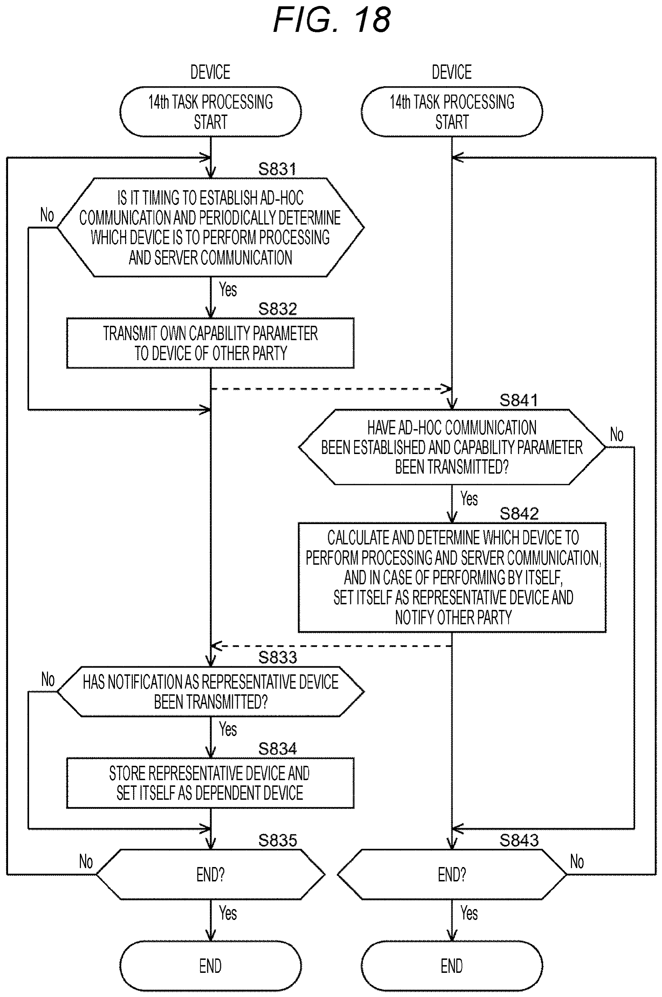

Next, processing of the 14th task performed between the devices 31' will be described with reference to a flowchart of Fig. 18.

In step S831, the processing/communication device determination unit 277 determines whether or not it is a timing to establish ad-hoc communication and determine which device 31' is to periodically perform processing and server communication.

In step S831, in a case where it is determined that it is a timing to establish the ad-hoc communication and determine which device 31' is the representative device that periodically performs processing and server communication, the processing proceeds to step S832.

In step S832, the processing/communication device determination unit 277 reads the own device capability information 265 including the capability parameter and the like from the storage unit 254, controls the ad-hoc communication unit 255, and transmits the information to the other device 31'.

In the other device 31', in step S841, the processing/communication device determination unit 277 determines whether or not the ad-hoc communication has been established and the own device capability information 265 including the capability parameter has been supplied from the other device 31'.

In step S841, in a case where the ad-hoc communication is established and the own device capability information 265 including the capability parameter or the like is supplied from the other device 31', the processing proceeds to step S842.

In step S842, the processing/communication device determination unit 277 calculates and determines which device 31' is a representative device that performs processing and server communication from the transmitted own device capability information 265 of the other device 31' and the own device capability information 265 of it's own. Then, in a case where the processing/communication device determination unit 277 sets itself as the representative device, the processing/communication device determination unit registers itself as the representative device and controls the ad-hoc communication unit 255 to notify another device 31' that it is the representative device.

Note that, in the processing of step S842, when it is determined that the device itself is not the representative device, there is no notification to the other device 31'.

In step S833, the processing/communication device determination unit 277 controls the ad-hoc communication unit 255 to determine whether or not a notification as a representative device has been transmitted from another device 31'.

In a case where it is determined in step S833 that a notification as a representative device has been transmitted from another device 31', the processing proceeds to step S834.

In step S834, the processing/communication device determination unit 277 registers another device 31' as the representative device and sets itself as a dependent device on the basis of the supplied notification.

Note that, in step S831, in a case where ad-hoc communication has not been established or it is not the timing to determine which device 31' is the representative device that periodically performs processing and server communication, the processing in step S832 is skipped.

Furthermore, in step S833, in a case where a notification as a representative device is not transmitted from the other device 31', the processing of step S834 is skipped.

Moreover, in step S841, in a case where ad-hoc communication is not established, or in a case where the own device capability information 265 including the capability parameter and the like is not supplied from the other device 31', the processing of step S842 is skipped.

In steps S835 and S843, the processing/communication device determination unit 277 determines whether or not an instruction to end the processing is given, and in a case where the instruction to end the processing is not given, the processing returns to steps S831 and S841, and the subsequent processing is repeated.

Then, in a case where the instruction to end is given in steps S835 and S843, the processing is terminated.

Through the above processing, the 14th task processing is performed, and the representative device and the dependent device are set on the basis of the capability parameter reflecting the capability of each of the plurality of devices 31'.

Note that, in Fig. 18, a flowchart illustrating processing of the device 31' is illustrated on both the left and right, but processing of the both needs to be executed with another device 31', and processing of the both left and right is processing performed independently in the same device 31'.

<15th Task Processing>

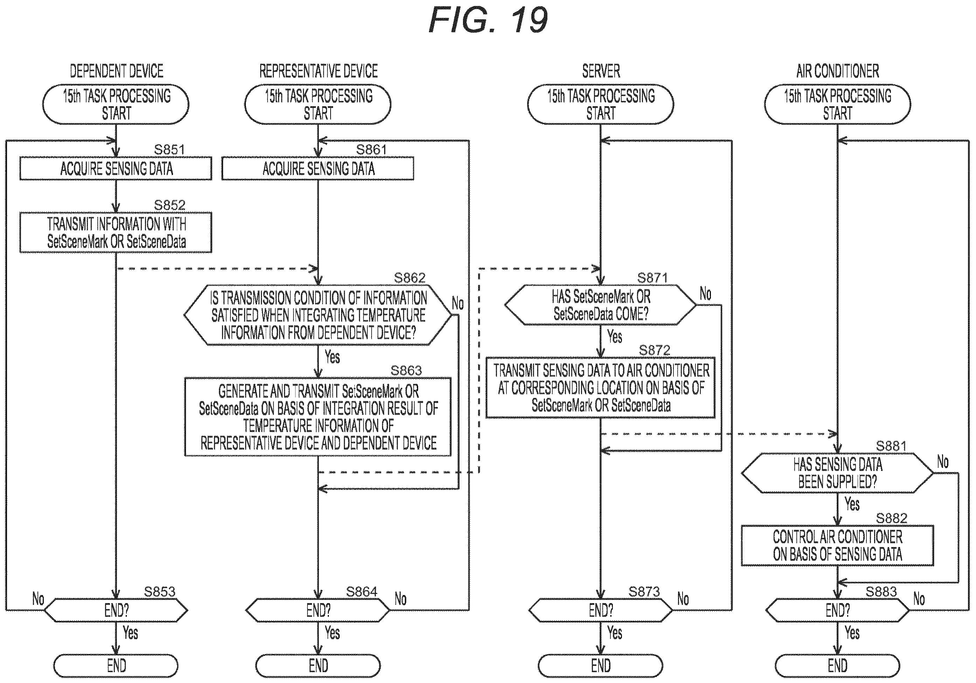

Next, the 15th task processing by the device 31', the server 32, and the air conditioner 33 will be described with reference to a flowchart in Fig. 19.

Note that, here, since it is assumed that one of the plurality of devices 31' is set as the representative device and the others are set as the dependent devices by the 14th task processing, the two flowcharts on the left side in the drawing are for the dependent device and the representative device in order from the left among the devices 31'.

In step S851, the sensor data transmission unit 278 of the control unit 252 in the device 31' as the dependent device acquires, for example, temperature information as the sensing data supplied from the sensor unit 251.

In step S852, the sensor data transmission unit 278 controls the ad-hoc communication unit 255 to perform transmission to the device 31' as the representative device. At this time, in the device 31' as the representative device, the data processing unit 273 controls the ad-hoc communication unit 255 to acquire sensing data transmitted from the dependent device, and outputs the sensing data to the condition determination unit 274.

In step S861, the data processing unit 273 of the control unit 252 in the device 31' as the representative device acquires, for example, temperature information as the sensing data supplied from the sensor unit 251 of the representative device, and outputs the temperature information to the condition determination unit 274.

In step S862, since the own device is the representative device, the condition determination unit 274 integrates the temperature information that is own sensing data and the temperature that is sensing data supplied from the dependent device by, for example, averaging, accesses the storage unit 254, searches for the SceneMode information 262, and determines whether or not the integrated sensing data satisfies the device condition setting.

Then, in a case where it is determined in step S862 that the integrated sensing data satisfies the device condition setting, the processing proceeds to step S863.

In step S863, the condition determination unit 274 outputs the sensing data to the information transmission unit 275 and instructs transmission of the sensing data. In response to this, the information transmission unit 275 generates SetSceneMark or SetSceneData on the basis of the integrated sensing data, and controls the communication unit 253 to send the data to the server 32.

Note that in a case where the integrated sensing data does not satisfy the device condition setting in step S862, the processing of step S863 is skipped.

In step S871, the device information reception unit 94 of the control unit 81 in the server 32 controls the communication unit 82 to determine whether or not SetSceneMark or SetSceneData has been received from the device 31'.

Then, in step S871, in a case where it is determined that SetSceneMark or SetSceneData is received from the device 31', the processing proceeds to step S872.

In step S872, the device information reception unit 94 controls the communication unit 82 to acquire SetSceneMark and SetSceneData, extracts included sensing data, and outputs the extracted sensing data to the information transmission unit 95. Then, the information transmission unit 95 controls the communication unit 82 to transmit sensing data to the air conditioner 33 as control information.

Note that, in step S871, in a case where SetSceneMark or SetSceneData is not received, the processing of step S872 is skipped.

In step S881, the control information reception unit 131 of the control unit 121 in the air conditioner 33 controls the communication unit 122 to determine whether or not sensing data of the device 31' is transmitted from the server 32.

Then, in a case where it is determined in step S881 that the sensing data of the device 31' is transmitted from the server 32, the processing proceeds to step S882.

In step S882, the control information reception unit 131 controls the air conditioning control unit 123 on the basis of the sensing data supplied from the server 32 via the communication unit 122 and the set temperature corresponding to the operation content of the temperature setting panel 34 to control the set temperature.

In a case where the sensing data of the device 31' is not transmitted from the server 32 in step S881, the processing in step S882 is skipped.

In steps S853, S864, S873, and S883, the sensor data transmission unit 278, the condition determination unit 274, the device information reception unit 94, and the control information reception unit 131 each determine whether or not an instruction to end the processing is given, and in a case where the instruction to end the processing is not given, the processing returns to steps S851, S861, S871, and S881, and the subsequent processing is repeated.

Then, in a case where the instruction to end is given in steps S853, S864, S873, and S883, the processing is terminated.

That is, the above processing is processing corresponding to the 15th task processing of Fig. 15, and by this processing, in the plurality of devices 31', the representative device acquires the sensing data of the dependent device, integrates the sensing data together with its own sensing data by processing of obtaining an average value, and transmits SetSceneMark or SetSceneData including the integrated sensing data only when the transmission condition is satisfied on the basis of the integrated sensing data and the device condition setting specified by the SceneMode information 62 acquired from the server 32.

Thus, only the representative device among the plurality of devices 31' communicates with the server 32, and the communication frequency is also controlled in SceneMode, so that it is possible to reduce the individual communication load of the device 31'.

In the above description, the air conditioner control system that controls the set temperatures of a plurality of air conditioners provided in an office or the like has been described as an example, but it is also applicable to other systems as long as they are systems that control a device using sensing data of a plurality of devices.

For example, the present invention can also be applied to a system in which a device including a vehicle speed sensor is mounted on each vehicle to measure a vehicle speed and transmit the vehicle speed to a server, thereby managing vehicle speed information of the vehicle and monitoring a traffic jam situation.

In the case of this system, at the time of traffic congestion, almost all the devices transmit the sensing data having a constant vehicle speed to the server, and since there are many vehicles in the vicinity, the load of the communication line and the load of the server increase although redundant information increases.

Therefore, in such a case, ad-hoc communication may be implemented between devices mounted on vehicles traveling in the vicinity, any one of the devices may be used as the representative device, and thereby, for example, when the vehicle speed of the surrounding vehicles is lower than a predetermined speed and substantially the same vehicle speed, it may be considered that a traffic jam has occurred, and only the representative device may transmit information of the vehicle speed to the server.

Such processing can reduce the load on the communication line and the load on the server.

Furthermore, it is possible to implement a child watching system by causing a child to have a device including a GPS sensor or the like that detects position information, transmitting the position information to a server as sensing data, and managing the position information of the child.

In this case, if the child is in a state of being with another friend, it can be confirmed that taking away of the child or the like has not occurred, and thus it is important information. Therefore, ad-hoc communication may be performed between the devices, one of the devices may be set as a representative device, and the representative device may transmit the position information of the child together with the position information of the other dependent devices. In this case, even if the user is playing in a park or the like away from home that the user does not usually go to, it can be determined that the user is not taken away because the user is with the friend.

Note that, in the above, although an example has been described in which the devices 31 and 31' establish communication with the server 32 once by the 11th task, the 12th task, or the like. However, a representative device may be determined first by ad-hoc communication, and only the representative device may establish communication with the server 32.

Furthermore, in a case where a predetermined type of sensing data can be acquired with higher accuracy than other devices among a plurality of devices, a device that can acquire highly accurate sensing data by ad-hoc communication is set as a representative device and is shared with other dependent devices, so that a device group that can perform ad-hoc communication can improve detection accuracy as a whole.

Moreover, for example, in a case where there is a device having a processing capability relatively higher than that of another device, the device may be used as a representative device for complicated processing. In addition, if emphasis is placed on power efficiency, a device with high power efficiency may be used as a representative device to share a large amount of processing. If emphasis is placed on the processing time, a device with a high processing speed may be set as a representative device, and a large amount of processing may be shared.

In addition, the representative device may be a device with the lowest load at that time while monitoring the load state in real time.

<<4. Example of Execution by Software>>

Incidentally, the series of processing described above can be executed by hardware, but can also be executed by software. In a case where the series of processing is executed by software, a program forming the software is installed from a recording medium into, for example, a computer built into dedicated hardware or a general-purpose computer that is capable of executing various functions by installing various programs, or the like.

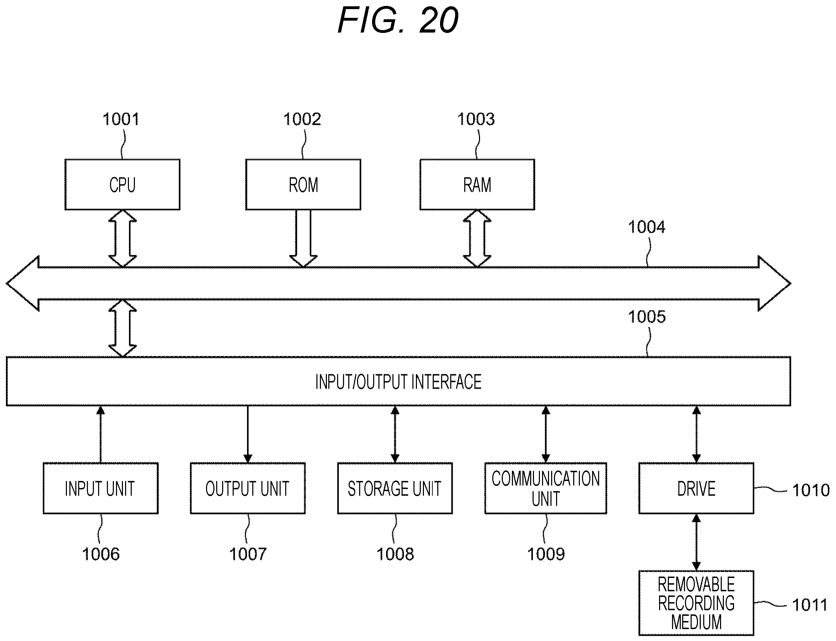

Fig. 20 illustrates a configuration example of a general-purpose computer. This computer includes a central processing unit (CPU) 1001. An input/output interface 1005 is connected to the CPU 1001 via a bus 1004. A read only memory (ROM) 1002 and a random access memory (RAM) 1003 are connected to the bus 1004.

The input/output interface 1005 is connected to an input unit 1006 including an input device such as a keyboard or a mouse with which the user inputs an operation command, an output unit 1007 that outputs a processing operation screen and an image of a processing result to a display device, a storage unit 1008 including a hard disk drive or the like that stores programs and various types of data, and a communication unit 1009 that includes a local area network (LAN) adapter or the like and executes communication processing via a network represented by the Internet. Furthermore, a drive 1010 that reads and writes data from and to a removable storage medium 1011 such as a magnetic disk (including flexible disk), an optical disc (including compact disc-read only memory (CD-ROM) and digital versatile disc (DVD)), a magneto-optical disk (including mini disc (MD)), or a semiconductor memory is connected.

The CPU 1001 performs various types of processing according to a program stored in the ROM 1002 or a program read from the removable storage medium 1011 such as a magnetic disk, an optical disc, a magneto-optical disk, or a semiconductor memory, installed in the storage unit 1008, and loaded from the storage unit 1008 into the RAM 1003. The RAM 1003 also appropriately stores data necessary for the CPU 1001 to perform various types of processing, and the like.

In the computer configured as described above, for example, the CPU 1001 loads the program stored in the storage unit 1008 into the RAM 1003 via the input/output interface 1005 and the bus 1004 and executes the program, thereby performing the above-described series of processing.

The program executed by the computer (CPU 1001) can be provided by being recorded in the removable storage medium 1011 as a package medium or the like, for example. Furthermore, the program can be provided via a wired or wireless transmission medium such as a local area network, the Internet, or digital satellite broadcasting.

In the computer, the program can be installed in the storage unit 1008 via the input/output interface 1005 by attaching the removable storage medium 1011 to the drive 1010. Furthermore, the program may be received by the communication unit 1009 by means of the wired or wireless transmission medium to be installed on the storage unit 1008. Further, the program can be installed in the ROM 1002 or the storage unit 1008 in advance.

Note that the program to be executed by the computer may be a program that executes processing in time series according to an order described in the present specification, or may be a program that executes processing in parallel or at a necessary timing such as when a call is made.

Note that the CPU 1001 in Fig. 20 implements the functions of the control unit 52 of the device 31 in Fig. 3, the control unit 81 of the server 32 in Fig. 4, the control unit 121 of the air conditioner 33 in Fig. 5, the control unit 151 of the temperature setting panel 34 in Fig. 6, and the control unit 252 in Fig. 16.

Furthermore, in the present specification, the system means a set of a plurality of components (devices, modules (components), and the like), and it does not matter whether or not all the components are in the same housing. Therefore, a plurality of devices housed in separate housings and connected to each other via a network and a single device including a plurality of modules housed in a single housing are both systems.

Note that the embodiment of the present disclosure is not limited to the above-described embodiment, and various modifications can be made without departing from the gist of the present disclosure.

For example, the present disclosure may have a configuration of cloud computing in which one function is shared by a plurality of devices via a network and processing is performed in cooperation.

Furthermore, each step described in the flowchart described above may be performed by a single device, or may be performed by a plurality of devices in a shared manner.

Moreover, in a case where a single step includes a plurality of pieces of processing, the plurality of pieces of processing included in the single step can be performed by a single device or performed by a plurality of devices in a shared manner.

Note that the present disclosure may also have the following configurations.

<1> An information processing device including:

a sensor that measures a sensor value;

a transmission unit that transmits information of the sensor value measured by the sensor to a server device as sensor value information; and

a transmission condition information acquisition unit that acquires, from the server device, transmission condition information that is a condition of the sensor value when the transmission unit transmits the sensor value information to the server device, in which

when the sensor value satisfies the condition on the basis of the transmission condition information, the transmission unit transmits the sensor value information to the server device.

<2> The information processing device according to <1>, in which the condition of the sensor value is set according to a communication frequency related to transmission of the sensor value information to the server device by the transmission unit.

<3> The information processing device according to <2>, in which the condition of the sensor value is a lower limit value, an upper limit value, within a predetermined range, outside a predetermined range, a specific value, and other than a specific value of the sensor value.

<4> The information processing device according to <2>, in which the condition of the sensor value is that the sensor value continues for a predetermined time in a state of a lower limit value, an upper limit value, within a predetermined range, outside a predetermined range, a specific value, or a value other than the specific value of the sensor value.

<5> The information processing device according to <2>, in which the transmission condition information acquisition unit acquires the transmission condition information voluntarily supplied from the server device.

<6> The information processing device according to <2>, in which the transmission condition information acquisition unit acquires the transmission condition information supplied in response to a request to the server device.

<7> The information processing device according to any one of <1> to <6>, further including:

an ad-hoc communication unit that performs ad-hoc communication with another information processing device;

and

a representative determination unit that determines one of the information processing device or the another information processing device as a representative device that performs ad-hoc communication with the another information processing device as a representative that communication with the server device, and determines another device as a dependent device, in which
in the dependent device,
the transmission unit transmits the sensor value information to the representative device by the ad-hoc communication, and
in the representative device,
the transmission unit integrates the sensor value information from the dependent device and the sensor value information of the representative device as integrated information, and transmits the integrated information to the server device when the integrated information satisfies the condition.

<8> The information processing device according to any one of <1> to <6>, in which
the server device includes:

a sensor value information acquisition unit that acquires the sensor value information; and
a transmission condition information supply unit that sets the condition of the sensor value when the information processing device transmits the sensor value information to the server device and supplies the condition as the transmission condition information.

<9> The information processing device according to any one of <1> to <8>, in which
the sensor value is a temperature, and the sensor is a temperature sensor.
<10> An information processing method including the steps of:

transmitting information of a sensor value measured by a sensor that measures the sensor value to a server device as sensor value information; and
acquiring, from the server device, transmission condition information that is a condition of the sensor value when the sensor value information is transmitted to the server device, in which
when the sensor value satisfies the condition on the basis of the transmission condition information, the sensor value information is transmitted to the server device.

<11> A program for causing a computer to function as:

a transmission unit that transmits, to a server device, information of a sensor value measured by a sensor that measures the sensor value as sensor value information; and
a transmission condition information acquisition unit that acquires, from the server device, transmission condition information that is a condition of the sensor value when the transmission unit transmits the sensor value information to the server device, in which
when the sensor value satisfies the condition on the basis of the transmission condition information, the transmission unit transmits the sensor value information to the server device.

<12> An information processing device including:

a sensor value information acquisition unit that acquires information of a sensor value measured and transmitted by a sensor of another information processing device as sensor value information; and
a transmission condition information supply unit that sets a condition of the sensor value when the another information processing device transmits the sensor value information to the information processing device, and supplies the information of the condition of the sensor value to the another information processing device as transmission condition information.

<13> The information processing device according to <12>, in which
the transmission condition information supply unit sets the condition of the sensor value in the transmission condition information according to a communication frequency related to transmission of the sensor value information from the another information processing device to the information processing device.
<14> The information processing device according to <12>, in which
the condition of the sensor value is a lower limit value, an upper limit value, within a predetermined range, outside a predetermined range, a specific value, or other than a specific value of the sensor value.

<15> The information processing device according to <12>, in which
the condition of the sensor value is that the sensor value continues for a predetermined time in a state of a lower limit value, an upper limit value, within a predetermined range, outside a predetermined range, a specific value, or a value other than the specific value of the sensor value.

<16> The information processing device according to <12>, in which
the transmission condition information supply unit voluntarily supplies the transmission condition information to the another information processing device.

<17> The information processing device according to <12>, in which
the transmission condition information supply unit supplies the transmission condition information to the another information processing device in response to a request from the another information processing device.

<18> The information processing device according to <12>, in which
the sensor value is a temperature, and the sensor is a temperature sensor.

<19> An information processing method including the steps of:

acquiring information of a sensor value measured and transmitted by a sensor of another information processing device as sensor value information;
setting a condition of the sensor value when the another information processing device transmits the sensor value information to the information processing device; and supplying the information of the condition of the sensor value to the another information processing device as transmission condition information.

<20> A program for causing a computer to function as:

a sensor value information acquisition unit that acquires information of a sensor value measured and transmitted by a sensor of another information processing device as sensor value information; and
a transmission condition information supply unit that sets a condition of the sensor value when the another information processing device transmits the sensor value information to the information processing device, and supplies the information of the condition of the sensor value to the another information processing device as transmission condition information.

REFERENCE SIGNS LIST

| | |
|---|---|
| 11, 11' | Air conditioner control system |
| 31, 31', 31-1 to 31-x | Device |
| 32 Server, 33, 33-1 to 33 y | Air conditioner |
| 34, 34-1 to 34-z | Temperature setting panel |
| 51 | Sensor unit |
| 52 | Control unit |
| 53 | Communication unit |
| 54 | Storage unit |
| 71 | Communication destination acquisition unit |
| 72 | SceneMode acquisition unit |
| 73 | Data processing unit |
| 74 | Condition determination unit |
| 75 | Information transmission unit |
| 81 | Control unit |
| 82 | Communication unit |
| 83 | Storage unit |
| 91 | Communication destination transmission unit |
| 92 | SceneMode transmission unit |
| 93 | Panel operation reception unit |
| 94 | Device information reception unit |
| 95 | Information transmission unit |
| 131 | Control information reception unit |
| 161 | Information transmission unit |
| 251 | Sensor unit |
| 252 | Control unit |

| | |
|---|---|
| 253 | Communication unit |
| 254 | Storage unit |
| 255 | Ad-hoc communication unit |
| 271 | Communication destination acquisition unit |
| 272 | SceneMode acquisition unit |
| 273 | Data processing unit |
| 274 | Condition determination unit |
| 275 | Information transmission unit |
| 276 | Inter-device communication establishment unit |
| 277 | Processing/communication device determination unit |
| 278 | Sensor data transmission unit |

**Claims**

1. An information processing device comprising:

   a sensor that measures a sensor value;
   a transmission unit that transmits information of the sensor value measured by the sensor to a server device as sensor value information; and
   a transmission condition information acquisition unit that acquires, from the server device, transmission condition information that is a condition of the sensor value when the transmission unit transmits the sensor value information to the server device, wherein
   when the sensor value satisfies the condition on a basis of the transmission condition information, the transmission unit transmits the sensor value information to the server device.

2. The information processing device according to claim 1, wherein
   the condition of the sensor value is set according to a communication frequency related to transmission of the sensor value information to the server device by the transmission unit.

3. The information processing device according to claim 2, wherein
   the condition of the sensor value is a lower limit value, an upper limit value, within a predetermined range, outside a predetermined range, a specific value, and other than a specific value of the sensor value.

4. The information processing device according to claim 2, wherein
   the condition of the sensor value is that the sensor value continues for a predetermined time in a state of a lower limit value, an upper limit value, within a predetermined range, outside a predetermined range, a specific value, or a value other than the specific value of the sensor value.

5. The information processing device according to claim 2, wherein
   the transmission condition information acquisition unit acquires the transmission condition information voluntarily supplied from the server device.

6. The information processing device according to claim 2, wherein
   the transmission condition information acquisition unit acquires the transmission condition information supplied in response to a request to the server device.

7. The information processing device according to claim 1, further comprising:

   an ad-hoc communication unit that performs ad-hoc communication with another information processing device; and
   a representative determination unit that determines one of the information processing device or the another information processing device as a representative device that performs ad-hoc communication with the another information processing device as a representative that communication with the server device, and determines another device as a dependent device, wherein
   in the dependent device,
   the transmission unit transmits the sensor value information to the representative device by the ad-hoc communication, and
   in the representative device,

the transmission unit integrates the sensor value information from the dependent device and the sensor value information of the representative device as integrated information, and transmits the integrated information to the server device when the integrated information satisfies the condition.

8. The information processing device according to claim 1, wherein
the server device includes:
a sensor value information acquisition unit that acquires the sensor value information; and a transmission condition information supply unit that sets the condition of the sensor value when the information processing device transmits the sensor value information to the server device and supplies the condition as the transmission condition information.

9. The information processing device according to claim 1, wherein
the sensor value is a temperature, and the sensor is a temperature sensor.

10. An information processing method comprising the steps of:

transmitting information of a sensor value measured by a sensor that measures the sensor value to a server device as sensor value information; and
acquiring, from the server device, transmission condition information that is a condition of the sensor value when the sensor value information is transmitted to the server device, wherein
when the sensor value satisfies the condition on a basis of the transmission condition information, the sensor value information is transmitted to the server device.

11. A program for causing a computer to function as:

a transmission unit that transmits, to a server device, information of a sensor value measured by a sensor that measures the sensor value as sensor value information; and
a transmission condition information acquisition unit that acquires, from the server device, transmission condition information that is a condition of the sensor value when the transmission unit transmits the sensor value information to the server device, wherein
when the sensor value satisfies the condition on a basis of the transmission condition information, the transmission unit transmits the sensor value information to the server device.

12. An information processing device comprising:

a sensor value information acquisition unit that acquires information of a sensor value measured and transmitted by a sensor of another information processing device as sensor value information; and
a transmission condition information supply unit that sets a condition of the sensor value when the another information processing device transmits the sensor value information to the information processing device, and supplies the information of the condition of the sensor value to the another information processing device as transmission condition information.

13. The information processing device according to claim 12, wherein
the transmission condition information supply unit sets the condition of the sensor value in the transmission condition information according to a communication frequency related to transmission of the sensor value information from the another information processing device to the information processing device.

14. The information processing device according to claim 12, wherein
the condition of the sensor value is a lower limit value, an upper limit value, within a predetermined range, outside a predetermined range, a specific value, or other than a specific value of the sensor value.

15. The information processing device according to claim 12, wherein
the condition of the sensor value is that the sensor value continues for a predetermined time in a state of a lower limit value, an upper limit value, within a predetermined range, outside a predetermined range, a specific value, or a value other than the specific value of the sensor value.

16. The information processing device according to claim 12, wherein
the transmission condition information supply unit voluntarily supplies the transmission condition information to the another information processing device.

17. The information processing device according to claim 12, wherein
the transmission condition information supply unit supplies the transmission condition information to the another information processing device in response to a request from the another information processing device.

18. The information processing device according to claim 12, wherein
the sensor value is a temperature, and the sensor is a temperature sensor.

19. An information processing method comprising the steps of:

acquiring information of a sensor value measured and transmitted by a sensor of another information processing device as sensor value information;
setting a condition of the sensor value when the another information processing device transmits the sensor value information to the information processing device; and supplying the information of the condition of the sensor value to the another information processing device as transmission condition information.

20. A program for causing a computer to function as:

a sensor value information acquisition unit that acquires information of a sensor value measured and transmitted by a sensor of another information processing device as sensor value information; and
a transmission condition information supply unit that sets a condition of the sensor value when the another information processing device transmits the sensor value information to the information processing device, and supplies the information of the condition of the sensor value to the another information processing device as transmission condition information.

EP 4 661 442 A1

# FIG. 1

11

31-1 — DEVICE

31-2 — DEVICE

31-3 — DEVICE

31-x — DEVICE

32 — SERVER

33-1 — AIR CONDITIONER

33-y — AIR CONDITIONER

34-1 — TEMPERATURE SETTING PANEL

34-z — TEMPERATURE SETTING PANEL

*FIG. 2*

*FIG. 3*

EP 4 661 442 A1

# FIG. 4

SERVER — 32

CONTROL UNIT — 81

- 91 — COMMUNICATION DESTINATION TRANSMISSION UNIT
- 92 — SceneMode TRANSMISSION UNIT
- 93 — PANEL OPERATION RECEPTION UNIT
- 94 — DEVICE INFORMATION RECEPTION UNIT
- 95 — INFORMATION TRANSMISSION UNIT

82 — COMMUNICATION UNIT

STORAGE UNIT — 83

101 — DEVICE DETERMINATION CONDITION

EP 4 661 442 A1

FIG. 5

33

EP 4 661 442 A1

AIR CONDITIONER 33

CONTROL UNIT 121

AIR CONDITIONING CONTROL UNIT 123

CONTROL INFORMATION RECEPTION UNIT 131

COMMUNICATION UNIT 122

FIG. 6

EP 4 661 442 A1

# FIG. 7

```
"Mode": {
    "type": "object",
    "description": "Defines either NICE defined SceneMode or DeviceDefinedAnalysis - which is a proprietary Computer Vision or AI in the device.",
    "properties": {
        "SceneMode": { "type": "string" },
        "TransducerID": { "type": "string", "description": "Transducer source for Process (required when there are multiple Transducers)." },
        "TransmissionInterval": { "type": "number", "description": "Time-based SceneMark generation rate in seconds." },
        "SceneModeConfig": {
            "type": "array",
            "description": "This defines the operating mode of the device. ",
            "items": {
                "type": "object"
                "properties": {
                    "AnalysisStage": { "type": "string", "enum": [ "Motion", "Detect", "Recognize", "Characterize" ] },
                    ...,
                    "AnalysisThreshold": { "type": "number", "description": "The output of the analysis should be greater than this value ..." },
                    "AdditionalThreshold": { "type": "number", "description": "The output of the analysis should be less than this value ..." },
                    "EqualsThreshold": { "type": "number", "description": "Sensor value is equal to the threshold." },
                    "NotEqualsThreshold": { "type": "number", "description": "Sensor value is not equal to the threshold." },
                    "DetectType": { "type": "string", "description": "Type of trigger using thresholds.", enum": [ "Level", "Edge" ] },
                    "TriggerDelay": { "type": "number", "description": "trigger delay in seconds" },
                    ...
                }
            } , ...
        },
        "required": [ "SceneMode" ]
    }
}
```

# FIG. 8

DEVICE

SERVER

( FIRST TASK PROCESSING START )

( FIRST TASK PROCESSING START )

S201
HAS PROCESSING TIMING RELATED TO GetManagementEndPoint COME?

No

Yes

S202
EXECUTE COMMANDS RELATED TO
GetManagementEndPoint,
GetManagementObject,
GetDateTime, and
GetControlObject

S211
HAS COMMUNICATION RELATED TO GetManagementEndPoint COME?

No

Yes

S212
RESPOND TO COMMANDS OF
GetManagementEndPoint,
GetManagementObject,
GetDateTime, and
GetControlObject

S203
ACQUIRE RESPONSE

S204
END?

No

Yes

S213
END?

No

Yes

( END )

( END )

# FIG. 9

DEVICE

SECOND TASK PROCESSING
START

SERVER

SECOND TASK PROCESSING
START

S231
HAS PROCESSING TIMING OF
GetSceneMode COME?

No

Yes

S232
ISSUE GetSceneMode

S241
HAS GetSceneMode COME?

No

Yes

S242
IN RESPONSE TO GetSceneMode,
SET AND TRANSMIT
DEVICE CONDITION

S233
ACQUIRE AND SET
DEVICE CONDITION SETTING
WHICH IS RESPONSE TO GetSceneMode

S234
END?

No

Yes

END

S243
END?

No

Yes

END

# FIG. 10

| DEVICE | SERVER | AIR CONDITIONER |
|---|---|---|
| THIRD TASK PROCESSING START | THIRD TASK PROCESSING START | THIRD TASK PROCESSING START |

**S261** ACQUIRE SENSING DATA

**S262** HAS DEVICE CONDITION SETTING THAT IS RESPONSE TO GetSceneMode BEEN SET ONCE, AND IS SETTING CONDITION SATISFIED?

No

Yes

**S263** TRANSMIT INFORMATION WITH SetSceneMark OR SetSceneData

**S271** HAS SetSceneMark OR SetSceneData COME? — No

Yes

**S272** TRANSMIT SENSING DATA TO AIR CONDITIONER AT CORRESPONDING LOCATION ON BASIS OF SetSceneMark OR SetSceneData

**S281** HAS SENSING DATA BEEN SUPPLIED? — No

Yes

**S282** CONTROL AIR CONDITIONER ON BASIS OF SENSING DATA

**S264** No — END? — Yes — END

**S273** END? — No — Yes — END

**S283** END? — No — Yes — END

EP 4 661 442 A1

## FIG. 11

TEMPERATURE SETTING PANEL

( FOURTH TASK PROCESSING START )

SERVER

( FOURTH TASK PROCESSING START )

S291
No ← HAS TEMPERATURE SETTING BEEN CHANGED BY OPERATING TEMPERATURE SETTING PANEL?

Yes

S292
TRANSMIT TEMPERATURE SETTING INFORMATION OF AIR CONDITIONER CORRESPONDING TO OPERATION CONTENT

S301
HAS TEMPERATURE SETTING INFORMATION OF AIR CONDITIONER CORRESPONDING TO OPERATION CONTENT BEEN SUPPLIED FROM TEMPERATURE SETTING PANEL? → No

Yes

S302
UPDATE DEVICE DETERMINATION CONDITION AND REFLECT IT ON NEXT RESPONSE OF GetSceneMode

S303
SEND INFORMATION OF SETTING TEMPERATURE CORRESPONDING TO OPERATION CONTENT TO AIR CONDITIONER

S293
No ← END?

Yes

END

S304
END? → No

Yes

END

## FIG. 12

DEVICE

SERVER

S311  GetManagementEndPoint

S411

S312

S412

S313  GetManagementObject

S413

S314

S414

S315  GetDateTime

S415

S316

S416

FIRST TASK

S317  GetControlObject

S417

S318

S418

S319  GetDateTime

S419

S320

S420

S321  SetSceneMode （Ex：AnalysisThreshold=30）

S421

SECOND TASK

S322

S422

S323  SetSceneMark with TEMPERATURE VALUE IN CASE OF EXCEEDING 30 DEGREES

S423

S324

S424

S325  SetSceneData with DATA OF INFRARED CAMERA IN SceneData IF THERE IS INFRARED CAMERA

S425

THIRD TASK
FOURTH TASK

S326

S426

EP 4 661 442 A1

## FIG. 13

# FIG. 14

EP 4 661 442 A1

## FIG. 15

13th TASK
- S523 Probe REQUEST/RESPONSE / S623
- S524 / S624
- S525 Authentication REQUEST/RESPONSE / S625
- S526 / S626
- S527 Association REQUEST/RESPONSE / S627
- S528 / S628

14th TASK
- S529 SEND CAPABILITY PARAMETER GROUP FOR DETERMINING WHICH DEVICE TO COLLECT INFORMATION / S629
- COMPARE CAPABILITY PARAMETERS AND NOTIFY THAT DEVICE HAVING HIGHER CAPABILITY PERFORMS SERVER COMMUNICATION
- S530 / S630

15th TASK
- S531 TRANSMIT TEMPERATURE SENSOR DATA / S631
- S532 / S632 / S633
- DETERMINE WITH TWO AVERAGE VALUES
- SetSceneMark with AVERAGE TEMPERATURE VALUE IN CASE WHERE AVERAGE VALUE EXCEEDS 30 DEGREES
- S634 / S735
- S635 / S736

EP 4 661 442 A1

43

*FIG. 16*

DEVICE 31'

SENSOR UNIT 251

CONTROL UNIT 252

- COMMUNICATION DESTINATION ACQUISITION UNIT 271
- SceneMode ACQUISITION UNIT 272
- DATA PROCESSING UNIT 273
- CONDITION DETERMINATION UNIT 274
- INFORMATION TRANSMISSION UNIT 275
- INTER-DEVICE COMMUNICATION ESTABLISHMENT UNIT 276
- PROCESSING/COMMUNICATION DEVICE DETERMINATION UNIT 277
- SENSOR DATA TRANSMISSION UNIT 278

COMMUNICATION UNIT 253

AD-HOC COMMUNICATION UNIT 255

STORAGE UNIT 254

- DESTINATION INFORMATION 261
- SceneMode INFORMATION 262
- SECURITY INFORMATION 263
- INTER-DEVICE COMMUNICATION SETTING 264
- OWN DEVICE CAPABILITY INFORMATION 265

# FIG. 17

DEVICE
13th TASK PROCESSING START

DEVICE
13th TASK PROCESSING START

S801
No ← IS DEVICE CAPABLE OF PERFORMING AD-HOC COMMUNICATION PRESENT?

Yes

S802
ATTEMPT TO ESTABLISH AD-HOC COMMUNICATION OF Probe REQUEST, Authentication REQUEST, AND Association REQUEST

S811
HAVE Probe REQUEST, Authentication REQUEST, AND Association REQUEST COME? → No

Yes

S812
WHEN SECURITY AND OTHER COMMUNICATION POSSIBLE CONDITION ARE SATISFIED, RESPOND AND ESTABLISH COMMUNICATION

S803
No ← END?

Yes

END

S813
END? → No

Yes

END

# FIG. 18

DEVICE

( 14th TASK PROCESSING START )

S831

No ⟨ IS IT TIMING TO ESTABLISH AD-HOC COMMUNICATION AND PERIODICALLY DETERMINE WHICH DEVICE IS TO PERFORM PROCESSING AND SERVER COMMUNICATION ⟩

Yes

S832

TRANSMIT OWN CAPABILITY PARAMETER TO DEVICE OF OTHER PARTY

DEVICE

( 14th TASK PROCESSING START )

S841

⟨ HAVE AD-HOC COMMUNICATION BEEN ESTABLISHED AND CAPABILITY PARAMETER BEEN TRANSMITTED? ⟩ No

Yes

S842

CALCULATE AND DETERMINE WHICH DEVICE TO PERFORM PROCESSING AND SERVER COMMUNICATION, AND IN CASE OF PERFORMING BY ITSELF, SET ITSELF AS REPRESENTATIVE DEVICE AND NOTIFY OTHER PARTY

S833

No ⟨ HAS NOTIFICATION AS REPRESENTATIVE DEVICE BEEN TRANSMITTED? ⟩

Yes

S834

STORE REPRESENTATIVE DEVICE AND SET ITSELF AS DEPENDENT DEVICE

S835

No ⟨ END? ⟩

Yes

( END )

S843

⟨ END? ⟩ No

Yes

( END )

# FIG. 19

DEPENDENT DEVICE
( 15th TASK PROCESSING START )

S851 ACQUIRE SENSING DATA

S852 TRANSMIT INFORMATION WITH SetSceneMark OR SetSceneData

S853 END? — No / Yes

END

REPRESENTATIVE DEVICE
( 15th TASK PROCESSING START )

S861 ACQUIRE SENSING DATA

S862 IS TRANSMISSION CONDITION OF INFORMATION SATISFIED WHEN INTEGRATING TEMPERATURE INFORMATION FROM DEPENDENT DEVICE? — No / Yes

S863 GENERATE AND TRANSMIT SetSceneMark OR SetSceneData ON BASIS OF INTEGRATION RESULT OF TEMPERATURE INFORMATION OF REPRESENTATIVE DEVICE AND DEPENDENT DEVICE

S864 END? — No / Yes

END

SERVER
( 15th TASK PROCESSING START )

S871 HAS SetSceneMark OR SetSceneData COME? — No / Yes

S872 TRANSMIT SENSING DATA TO AIR CONDITIONER AT CORRESPONDING LOCATION ON BASIS OF SetSceneMark OR SetSceneData

S873 END? — No / Yes

END

AIR CONDITIONER
( 15th TASK PROCESSING START )

S881 HAS SENSING DATA BEEN SUPPLIED? — No / Yes

S882 CONTROL AIR CONDITIONER ON BASIS OF SENSING DATA

S883 END? — No / Yes

END

EP 4 661 442 A1

# FIG. 20

| | | |
|---|---|---|
| CPU (1001) | ROM (1002) | RAM (1003) |

BUS 1004

INPUT/OUTPUT INTERFACE 1005

| INPUT UNIT (1006) | OUTPUT UNIT (1007) | STORAGE UNIT (1008) | COMMUNICATION UNIT (1009) | DRIVE (1010) |

REMOVABLE RECORDING MEDIUM 1011

EP 4 661 442 A1

## INTERNATIONAL SEARCH REPORT

| International application No. |
| --- |
| **PCT/JP2024/001198** |

| A. | CLASSIFICATION OF SUBJECT MATTER |
| --- | --- |

*H04W 4/38*(2018.01)i; *H04W 72/50*(2023.01)i; *H04W 72/121*(2023.01)i
FI: H04W4/38; H04W72/121; H04W72/50

According to International Patent Classification (IPC) or to both national classification and IPC

| B. | FIELDS SEARCHED |
| --- | --- |

Minimum documentation searched (classification system followed by classification symbols)

H04W4/38; H04W72/50; H04W72/121

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2015-170937 A (CASIO COMPUTER CO., LTD.) 28 September 2015 (2015-09-28) paragraphs [0017]-[0018], [0037]-[0040] | 1-5, 8-12, 14-16, 18-20 |
| Y | | 6-7, 17 |
| A | | 13 |
| Y | JP 2020-028099 A (OKI ELECTRIC INDUSTRY CO., LTD.) 20 February 2020 (2020-02-20) paragraphs [0021], [0046], [0052]-[0054], fig. 4 | 6, 17 |
| Y | JP 2006-270239 A (MITSUI ENGINEERING & SHIPBUILDING CO., LTD.) 05 October 2006 (2006-10-05) paragraphs [0015], [0033], fig. 1 | 7 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 March 2024** | **02 April 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/001198**

| Patent document cited in search report | | | Publication date (day/month/year) | Patent family member(s) | Publication date (day/month/year) |
|---|---|---|---|---|---|
| JP | 2015-170937 | A | 28 September 2015 | US 2015/0256968 A1 paragraphs [0028]-[0029], [0048]-[0051] | |
| JP | 2020-028099 | A | 20 February 2020 | (Family: none) | |
| JP | 2006-270239 | A | 05 October 2006 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022004412 A1